# EUROPÄISCHE PATENTANMELDUNG

(11) **EP 4 242 142 A1**
(43) Veröffentlichungstag der Anmeldung: **13.09.2023**
(21) Anmeldenummer: 23160837.3
(22) Anmeldetag: 08.03.2023
(51) Int. Cl.: B65G 47/61, B65G 1/137, B65G 47/52

(54) **VORRICHTUNG, VERFAHREN UND SYSTEM ZUR KOMMISSIONIERUNG VON STÜCKGÜTERN**

(30) Priorität: 08.03.2022 US 202217689548; 08.07.2022 CH 8212022
(71) Anmelder: FERAG AG, 8340 Hinwil (CH)
(72) Erfinder: Bretz, Markus, 8704 Herrliberg (CH)
(74) Vertreter: IPrime Rentsch Kaelin AG

(57) **Zusammenfassung**

Eine Vorrichtung zur Kommissionierung von Waren (2), mit einer Warenzuführung (3), umfassend eine Entnahmevorrichtung (10) mit mindestens einer Entnahmestelle (11) zum Entladen von Waren (2), und ein Entnahmehandlingmodul (20), an das die Waren (2) von der Entnahmevorrichtung (10) übergeben werden, wobei das Entnahmehandlingmodul (20) mindestens ein Warenaufnahmeelement (21, 31, 81) sowie ein Bewegungselement (22, 32) umfasst zur Weitergabe der Waren (2) an eine nachgeschaltete Fördereinheit (30).

## Beschreibung

### Gebiet der Technik

Die Erfindung bezieht sich auf das Gebiet der Transport- und Fördertechnik, insbesondere das Kommissionieren von Waren. Sie betrifft eine Vorrichtung, ein Verfahren und ein System zur Kommissionierung von Stückgütern gemäss den Oberbegriffen der unabhängigen Patentansprüche.

### Technologischer Hintergrund

Die Kommissionierung von Stückgütern, letztere im Folgenden auch als Waren bezeichnet, für Kunden-, Produktionsaufträge oder andere vorbereitende Stückgutzusammenstellungen spielt in der Transport- und Fördertechnik eine zentrale Rolle. Waren, also typischerweise für Kommissionierungsaufträge für Endabnehmer oder Kunden bestimmt, können besonders vorteilhaft im Rahmen der Erfindung auch in komplexen Logistiksystemen kommissioniert werden. Waren bilden einen Sonderfall von Stückgütern, wobei in der folgenden Beschreibung mit Waren immer auch andere Stückgüter mit gemeint sind, wie beispielsweise Teile für die Automobilherstellung oder Maschinenmontage, Teile für Assemblieranlagen usw.

In der Fördertechnik unterscheidet man häufig zwischen zwei Arten von Kommissionierungssystemen, nämlich dem «Person-zur-Ware-System» und dem «Ware-zur-Person-System». Letzteres erfolgt dynamisch und weitestgehend automatisiert, beides Eigenschaften, die in der Fördertechnik wünschenswert sind. «Ware-zur-Person-Systeme» sind jedoch mit höheren Kosten, komplexerem Aufbau der Logistiksysteme und einem erhöhten Risiko eines fehlerhaften Übergabetimings aufgrund von Förderstörungen, Missmanagement, Kapazitätsüberlastung oder sogar eines Stillstands des Warenflusses bei Störungen von Komponenten oder eines Maschinenausfalls verbunden.

Unter der Kommissionierung in einem dynamischen «Ware-zur-Person-System» ist im vorliegenden Sinne nicht nur das Zusammenstellen von Waren aufgrund von Anforderungen der eigentlichen Warenförderung zu verstehen, sondern auch die auftragsorientierte Bereitstellung, Zwischenlagerung/ Pufferung, Sortierung, Entnahme und Transport der zu kommissionierenden Waren. Nebst Fördersystemen, -bändern und Förderern sollten Kommissionierungssysteme Puffermöglichkeiten aufweisen, welche einen dynamischen Betrieb des Kommissionierungssystems in Abhängigkeit verschiedener Parameter, beispielsweise Prioritäten einzelner Aufträge, Nachfrage, Energieverbrauch oder anderen Vorgaben, ermöglichen und dadurch das Risiko einer Verzögerung oder gar eines Stillstands von Anlagebereichen oder der ganzen Anlage reduzieren bzw. vermeiden.

WO 2018/142243 A1 offenbart eine Vorrichtung zum Entleeren hängend geförderter Transporttaschen, umfassend ein Fördersystem, insbesondere ein schienengeführtes Fördersystem oder ein Förderkettensystem, mit welchem Transporttaschen hängend entlang einem Förderweg zugeführt werden können, wobei die Transporttaschen eine im befüllten Zustand nach oben offene Tasche mit einer Vorderseite aufweisen, und ein umlaufendes Förderband zur Übernahme von in den Transporttaschen transportierten Waren. In einem Kontaktabschnitt sind der Förderweg des Fördersystems und der Förderweg des Förderbands derart zueinander angeordnet, dass der Abstand des Förderwegs des Fördersystems und des Förderwegs des Förderbands kontinuierlich kleiner wird, so dass bei der Förderung einer Transporttasche entlang des Kontaktabschnitts die Vorderseite der Tasche der Transporttasche das Förderband kontaktiert und auf diesem zu liegen kommt und dabei die Transporttasche nach hinten geschwenkt wird. Eine Förderanlage gemäss WO 2018/142243 ermöglicht eine automatische und kontinuierliche Entleerung von Transporttaschen und ein anschliessendes Wegfördern von in Transporttaschen transportierten Waren. Die Vorrichtung zeigt keine besonders optimierte Puffer- und Sortiermöglichkeit der Waren nach dem Entleeren der Transporttaschen.

Förderanlagen mit Kommissionierungssystemen sind beispielsweise aus EP 3 581 524 A1 bekannt. In dieser Druckschrift wird ein Verfahren und eine Vorrichtung zum Erstellen von Aufträgen aus Einzelwaren offenbart, umfassend ein Fördern mindestens einer Einzelware mittels jeweils einer Tragevorrichtung zu einer Entladestation. An der Entladestation erfolgt ein auftragsorientiertes Entladen der mindestens einen Einzelware von der Tragevorrichtung, woraufhin die mindestens eine Einzelware eines Auftrags von einer Transportinfrastruktur zur einer Packstation transportiert wird. Die Transportinfrastruktur, an welche die Auftragswaren übergeben werden, ist dort namentlich ein autonomes Fahrzeug. Ein wesentlicher Nachteil eines derartigen Kommissionierungssystems liegt darin, dass die Transportinfrastruktur an die jeweilige Entladestation sowie an die Packstation angepasst werden muss und Einzelwaren eines Auftrags bei der Entladestation bis zum Weitertransport an die Packstation durch die Transportinfrastruktur stehen bleiben. Dies führt direkt an der Entladestation zu unerwünschten Wartezeiten und unter anderem zu einem Risiko schwerwiegender Staubildung oder gar eines Stillstand bei der Entlade- und/oder Packstation aufgrund der nicht vorhandenen Pufferfähigkeit der Entladestation. Sind im Rahmen der Transportinfrastruktur nicht genügend autonome Fahrzeuge für die Wegförderung verfügbar oder treten Transportstörungen auf, so besteht das Problem, dass einzelne Entladestation oder ganze Anlageteile angehalten werden müssen, bis ein Entladen wieder möglich wird.

Aus DE 10 2013 104 423 A1 ist ein Fördersystem und -verfahren zum Fördern von Stückgütern mit oder ohne Ladungsträger zwischen einer oberen Transferstation und einer unteren Transferstation bekannt. Das Fördersystem umfasst einen Senkrechtförderer, wobei der Senkrechtförderer ein Gestell, mindestens einen Rotor, der um eine Drehachse drehbar im Gestell gelagert ist und durch einen Antrieb aus einer Aufnahmestellung in eine Abgabestellung bewegbar ist, und mindestens eine Zinkenaufnahme aufweist. Jede der Zinkenaufnahmen ist derart um mindestens eine jeweilige Aufnahmeachse drehbar im Rotor gelagert, dass sich jede der Zinkenaufnahmen während einer Drehung des Rotors um die Drehachse auf einer im Wesentlichen kreisförmigen Bahn um die Drehachse bewegt, die die obere Transferstation und die untere Transferstation schneidet. Der Senkrechtförderer aus DE 10 2013 104 423 A1 eignet sich nur für gewisse Fördersysteme und ist daher in vielen bestehenden Fördersystemen nicht oder nur beschränkt verwendbar. Ferner wird die Problematik des Pufferns von Stückgütern zwischen den oberen und unteren Transferstation nicht gelöst, sodass es zu Verzögerungen, Störungsanfälligkeit und in der Folge zu Kosternsteigerungen kommen kann. Eine waagerechter Förderer ist ebenfalls nicht vorgesehen, was die Kommissionierung der Stückgüter innerhalb des Fördersystems weiter einschränkt.

Die vorliegende Erfindung strebt einen konzeptionell verbesserten Lösungsansatz an, bei dem den Nachteilen des Standes der Technik entgegengewirkt wird und der einen optimiert störungsfreien Betrieb komplexer Kommissionierungsanlagen erlaubt. Nebst den spezifischen obengenannten Nachteilen des Standes der Technik wird eine Erhöhung der Leistung vorgesehen und auch die Speditionsvorbereitung des Kommissionierungssystems in diesem Gebiet optimiert.

### Darstellung der Erfindung

Gemäss der vorliegenden Erfindung werden mindestens einzelne der Nachteile aus dem Stande der Technik beseitigt und es wird ein Kommissionierungssystem geschaffen, das einen hohen Automatisierungsgrad ermöglicht, mit optimierter Ausgestaltung der Entnahme der Waren ab mehreren oder einer Vielzahl von Entnahmestationen. Vorteilhafte Ausführungsformen sind in der Beschreibung vorgesehen und ergeben sich namentlich aus den Patentansprüchen.

Die erfindungsgemässe Lösung kann durch verschiedene, jeweils für sich vorteilhafte und, sofern nicht anders ausgeführt, auf verschiedene Weise miteinander kombinierbare Ausgestaltungen weiter verbessert werden. Auf diese Ausführungsformen und die mit ihnen verbundenen Vorteile wird im Folgenden eingegangen.

Ein wesentlicher Aspekt der Erfindung betrifft eine Vorrichtung zur Kommissionierung von Waren, mit einer Warenzuführung zu einer Entnahmevorrichtung, umfassend eine Entnahmevorrichtung mit mindestens einer Entnahmestelle zum Entladen von Waren, und ein Entnahmehandlingmodul, an das die Waren von der Entnahmevorrichtung übergeben werden, wobei das Entnahmehandlingmodul mindestens ein Warenaufnahmeelement sowie mindestens ein Bewegungselement umfasst zur Weitergabe der Waren an eine nachgeschaltete Fördereinheit.

In einer einfachen Ausführung umfasst die erfindungsgemässe Entnahmevorrichtung eine Entnahmestelle der Waren, wobei die Entnahmestelle direkt oder teilweise mit der vorhandenen Logistik, d.h. der Warenzuführung, verbunden ist. Die Warenzuführung an die Entnahmevorrichtung kann in einer möglichen Ausführungsform als umfassende Förderanlage ausgebildet sein, beispielsweise einer Förderanlage gemäss WO 2018/142243 A1 der hiesigen Anmelderin.

Die Warenzuführung an die Entnahmevorrichtung kann ausserdem auch mehrere voneinander unabhängige, zusammenwirkende Förderanlagen umfassen, sodass eine hohe Einsatzvielfalt in der Intralogistik erzielt werden kann. Ausserdem kann die Warenzuführung ein Beladungsmanagement von Transporteinheiten eines Fördersystems aufweisen, wie diese in der Schweizer Patentanmeldung CH070614/2021 (Anmeldedatum vom 29. November 2021), ebenfalls der hiesigen Anmelderin gezeigt ist. Beide Dokumente gelten hier bezüglich deren Beschreibung als in vollem Umfang referenziert und in der vorliegenden Anmeldung inhaltlich mit enthalten.

Eine derartige Förderanlage umfasst bevorzugt ein Fördersystem und ein umlaufendes Förderband, wobei die Förderanlage mit der Entnahmevorrichtung und diese mit mindestens einem Entnahmehandlingmodul fördertechnisch verbunden ist. Die Entnahmevorrichtung umfasst vorteilhafterweise mindestens eine Befülleinheit, welche der Entnahme der Waren von der Entnahmestelle der Entnahmevorrichtung oder direkt von der Warenzuführung und der Warenübergabe an das Entnahmehandlingmodul dient.

In einer vorteilhaften Ausführungsform einer erfindungsgemässen Vorrichtung umfasst die Warenzuführung eine Förderanlage, insbesondere ein Fördersystem und ein umlaufendes Förderband, welche fördertechnisch mit der Entnahmevorrichtung und diese fördertechnisch mit dem Entnahmehandlingmodul verbunden ist, wobei die Entnahmevorrichtung mindestens eine Befülleinheit umfasst.

Besonders vorteilhaft ist eine Puffereinheit in die Befülleinheit integriert oder dieser als separates Modul zugeordnet.

Dies hat den Vorteil, dass bei der Abgabe von Waren an die Entnahmevorrichtung bei hoher Zuführleistung keine unerwünschten Förderstaus entstehen. Die Befülleinheit kann dabei auch mehrere integrierte Pufferstellen besitzen, so dass die Weitergabe der Waren an die Entnahmevorrichtung ohne Störung auch bei hoher Zuführleistung erfolgen kann.

Für besonders hohe Verarbeitungskapazitäten oder besondere logistische Anforderungen kann auch eine leistungsfähigere Puffereinheit als separates Modul der Befülleinheit zugeordnet sein. Eine solche Puffereinheit kann auf diese Weise Leistung erhöhen (insbesondere durch mindestens vier oder mehr Pufferstellen) und in besonders bevorzugten Lösungen auch eine Umsortierung der zugeführten Waren ermöglichen. Auf diese Weise dient die Puffereinheit zum Puffern der Waren vor der Übergabe der Waren an das Entnahmehandlingmodul ab der Entnahmevorrichtung.

Die Puffereinheit ist somit als integrierte oder separate mit der Entnahmevorrichtung fördertechnisch verbundene Einheit ausgebildet. Der Förderanlage vorgeschaltet können dem Fachmann bekannte Lager, Sorter, Verarbeitungs- und Systemüberwachungssysteme etc. sein. Das Fördersystem führt Waren entlang eines Förderwegs bis zu einem Übergabeabschnitt des Fördersystems und des Förderbands, bei welchem die Waren an das Förderband überführt werden. Von dem Förderband aus gelangen die Waren zu der Entnahmestelle der Entnahmevorrichtung.

In einer anderen vorteilhaften Ausführungsform einer erfindungsgemässen Vorrichtung weist die Entnahmestelle eine erste Zuführeinheit zum Abgeben der Waren von der Warenzuführung an die Entnahmevorrichtung auf.

Ebenfalls vorteilhaft ist die Zuführeinheit als Zuführrutsche ausgebildet, entlang welcher die Waren schwerkraftgetrieben in Richtung der Entnahmevorrichtung gleiten.

In weiteren alternativen Ausführungsformen umfasst die Entnahmestelle eine entlang einem Fördersystem geförderte Transporttasche, aus welcher die Waren direkt an die Entnahmevorrichtung entladen werden, wobei in diesem Bereich bevorzugt eine Puffereinrichtung angeordnet ist für den Fall, dass die Entnahmevorrichtung kurzfristige Wartezeiten bei der Zuführung erfordert. Hierzu kann ein Stopper, beispielsweise mit einem Pneumatik-Zylinder oder mittels Luftabbremsung, verwendet werden, um die geförderten Transporttaschen in einer Entladeposition anzuhalten und nach einer Entladung der Waren wieder freizugeben. Alternativ kann auch bevorzugt eine Pufferstrecke oder ein Puffer-Umlauf vor der Zuführstelle angeordnet sein.

In einer weiteren vorteilhaften Ausführungsform einer erfindungsgemässen Vorrichtung weist die Entnahmevorrichtung eine zweite Zuführeinheit auf, um die Waren an das Entnahmehandlingmodul zu überführen.

Gemäss einer weiteren Ausführungsform ist es möglich, dass die Entnahmestelle mehrere unterschiedlich ausgebildete Zuführeinheiten beziehungsweise passive oder aktive Übergabevorrichtungen umfasst. So können beispielsweise mittels einer ersten Zuführeinheit Waren an Warenaufnahmeelemente der Entnahmevorrichtung entladen werden, sowie Waren mittels einer zweiten Zuführeinheit den Warenaufnahmeelementen zugefügt werden. Dabei kann bevorzugt die erste Zuführeinheit insbesondere als ein Hängeförderer (z.B. ein Taschenförderer) und die zweite Zuführeinheit als ein Förderer mit Liegewaren ausgebildet sein. Diese geben die geförderten Waren wahlweise direkt oder indirekt an die Entnahmestelle ab. Die erste und zweite Zuführeinheit ermöglichen in einer vorteilhaften Ausführung eine voneinander unabhängige Übergabe von Waren an entsprechende Warenaufnahmeelemente. Eine derartige Ausgestaltung der Zuführung von Waren an die Entnahmevorrichtung ist besonders bei sich dynamisch verändernden Kommissionierungsanforderungen vorteilhaft, da Waren zu unterschiedlichen Zeiten und aus unterschiedlichen Fördersystemen kommissionsgerecht den Warenaufnahmeelementen zugeteilt werden können. Ausserdem ist dies insbesondere dann vorteilhaft, wenn Waren aus verschiedenen Lagerstellen einer Intralogistik mit unabhängigen Fördersystemen einem Auftrag hinzugefügt werden müssen. Die Zuführeinheiten können nebst den bereits genannten Zuführlösungen auch als weitere dem Fachmann bekannte Zuführlösungen realisiert werden.

Die Befülleinheit einer erfindungsgemässen Entnahmevorrichtung kann zwischen der Entnahmestelle der Entnahmevorrichtung und/oder direkt an dem Entnahmehandlingmodul angeordnet sein. Dies ermöglicht eine Zwischenpufferung und/oder eine auftragsorientierte Weitergabe der Waren an das Entnahmehandlingmodul.

Das Entnahmehandlingmodul ist der Entnahmevorrichtung nachgeschaltet und wirkt mit diesem zusammen. Das Entnahmehandlingmodul kann zusätzliche Funktionen oder auch einzelne Arbeitsschritte ausführen, die weitergehen, als das Entnehmen von Waren. Dies kann beispielsweise das Vorverpacken von kleinen Warenteilen in Packungseinheiten umfassen, das Subgruppieren einzelner Waren ermöglichen, das Bedrucken von Waren oder Warengruppierungen eines Auftrags, eine sensorische Warenkontrolle oder besonders bevorzugt eine der Entnahmestelle nachgeschaltete Pufferung sein. Weitere dem Fachmann bekannte Verarbeitungsschritte sind in alternativen Ausführungsformen realisierbar, insofern sich diese nicht explizit ausschliessen.

Die Befülleinheit einer erfindungsgemässen Vorrichtung weist vorteilhaft mindestens ein Warenaufnahmeelement auf, welches als Transportförderer ausgebildet ist, und/oder welches Waren einzeln oder gesammelt nach Auftrag aufnehmen kann.

Ferner kann die Befülleinheit dazu dienen, nicht befüllte Warenaufnahmeelemente bereitzustellen, welche anschliessend von der Entnahmestelle der Entnahmevorrichtung oder direkt von der Warenzuführung mit Waren befüllt werden. In bevorzugten Ausführungsformen ist die Befülleinheit als Förderer, insbesondere ein Förderband, Schalenförderer, Rollenförderer, Trogförderer, Quergurtförderer oder horizontales Sortier-Array ausgebildet, welches nicht befüllte und/oder befüllten Warenaufnahmeelemente zum Entnahmehandlingmodul fördern kann.

Ein Warenaufnahmeelement kann in möglichen Ausführungsformen als Transportbox, Container, Transporttasche, Schale, Tablar oder als eine Auflagefläche realisiert werden. Die Warenaufnahmeelemente sind dabei nicht auf die hier aufgelisteten Ausführungsformen beschränkt. Dem Fachmann ergeben sich aus der Beschreibung und den dazugehörigen Figuren zusätzlich zu den hier offenbarten Beispielen verschiedene weitere Lösungen. Bevorzugt kommt in der Erfindung aber eine metallische oder metallisch beschichtete Auflagefläche zum Einsatz, die eine geeignete Haft-/Gleitreibung und einen nach oben weisenden Aussenrand aufweist, damit die zugeführten Waren nicht ungewollt von der Auflagefläche wegrutschen.

In einer vorteilhaften Variante einer erfindungsgemässen Vorrichtung ist das mindestens eine Bewegungselement als ein passives Bewegungselement ausgebildet.

Das heisst, das Bewegungselement hat keinen zugeordneten aktiven Antrieb, also insbesondere keine motorische Bewegung.

In einer anderen vorteilhaften Variante einer erfindungsgemässen Vorrichtung ist das mindestens eine Bewegungselement als ein aktives Bewegungselement ausgebildet.

Das heisst, das Bewegungselement hat einen motorischem Antrieb oder einen anderen Aktor.

Soweit die Weitergabe der Waren erfindungsgemäss durch ein Neigen der Auflagefläche erfolgen soll, ist die Gleitreibung so gewählt, dass die zu verarbeitenden Waren, nach einstellbarer Neigung der Fläche, durch blosse Schwerkraft von der Auflagefläche rutschen können (passives Bewegungselement).

Eine alternative, ebenfalls bevorzugte Variante besteht darin, dem Auflagetisch ein aktives Bewegungselement zuzuordnen, bspw. einen Stössel oder Förderrollen, die je angetrieben sind. Ein aktives Bewegungselement kann in weiteren möglichen Ausführungsformen einen Schieber, eine Kippfläche, einen Roboterarm, eine Rutsche, eine Förderplatte, einen Förderer, insbesondere ein Förderband, Schalenförderer, Rollenförderer, Trogförderer, Quergurtförderer oder horizontales Sortier-Array umfassen. Die korrekte Weitergabe der Waren durch das Bewegungselement wird bevorzugt durch eine Sensorik überwacht, die der sicheren Warenweitergabe dient. Dies kann insbesondere durch einen optischen Sensor oder einen Ultraschallsensor erfolgen.

Ein erfindungsgemässes Entnahmehandlingmodul umfasst mindestens ein Warenaufnahmeelement sowie ein Bewegungselement zur Weitergabe der Waren an eine nachgeschaltete Fördereinheit. In besonders bevorzugter Ausführungsform ist das Warenaufnahmeelement eine offene Transportbox, welche von der Befülleinheit der Warenzuführung durch das Entnahmehandlingmodul übernommen wird und an die Fördereinheit weitergegeben wird.

Eine Rückgabe der Transportbox von der Fördereinheit an das Entnahmehandlingmodul und die Befülleinheit der Warenzuführung ist ebenfalls möglich. Eine derartiges Rücktransportieren ist für leere Transportboxen nach abgeschlossener Weitergabe der Waren an ein Versandraum oder eine Speditionsstelle, oder bei fehlerhafter Befüllung der Transportboxen vorgesehen.

In einer vorteilhaften Ausführungsform einer erfindungsgemässen Vorrichtung weist das Entnahmehandlingmodul Einstellmittel auf, mit welchen die Entnahme der Waren von der Entnahmevorrichtung und die Weitergabe der Waren an die Fördereinheit anpassbar sind.

Mit diesen Einstellmitteln können die Warenaufnahmeelemente und/oder die Bewegungselemente des Entnahmehandlingmoduls auf die Übergabe der Waren an die Entnahmestelle der Entnahmevorrichtung und an die Fördereinheit angepasst werden. In einer möglichen Ausführungsform können die Einstellmittel pneumatische, mechanische, elektromechanische und/oder elektromagnetische Elemente umfassen, mit welchen die Höhe der Warenaufnahmeelemente des Entnahmehandlingmoduls und somit der Übergabepunkt verstellbar ist. In weiteren Ausführungsformen können die Einstellmittel auch eine horizontale Einstellung der Warenaufnahmeelemente und/oder Bewegungselemente begünstigen.

Weiterhin sieht die Erfindung in bevorzugten Lösungen ein Entnahmehandlingmodul vor, das Einstellmittel aufweist, mit welchen die Entnahme der Waren von der Entnahmevorrichtung und die Weitergabe der Waren an die Fördereinheit anpassbar sind. Das Entnahmehandlingmodul vermeidet auf diese Weise, dass Entnahmevorrichtung an die oft standardisierten Fördereinheiten (oftmals von unterschiedlichen Herstellern angeboten) angepasst werden muss.

Ein solches Einstellmittel kann bevorzugt eine höhenverstellbare oder neigbare Übergabefläche sein oder auch ein Kopplungselement, an das temporär eine Fördereinheit kraftschlüssig angelenkt wird (z.B. durch Magnetkraft oder ansteuerbare, temporäre Rastelemente, die in besonders bevorzugten Ausführungsformen mit Federelementen den Kraftschluss herbeiführen). Auf diese Weise wird eine sichere Warenübergabe ermöglicht.

In einer vorteilhaften Ausführungsform einer erfindungsgemässen Vorrichtung umfasst das Entnahmehandlingmodul eine Steuerungseinheit mit Kommunikationsmitteln und mindestens ein Kontrollmittel für die Waren.

Die Steuerungseinheit ist hierbei mit der Warenzuführung, der Entnahmevorrichtung und der Fördereinheit fördertechnisch verbunden, und ermöglicht eine Anlagensteuerung sowie Materialflusssteuerung. Beispielsweise kann ein Lagermitarbeiter mittels der Steuerungseinheit eine fehlerhafte Ware in dem Entnahmehandlingmodul von einer Weiterförderung ausscheiden. Zudem ermöglichen die Kommunikationsmittel der Steuerungseinheit einen Informationsaustausch zwischen der Warenzuführung, der Entnahmevorrichtung, dem Entnahmehandlingmodul und der Fördereinheit.

Dies ermöglicht einen optimalen Anlagenbetrieb und ein frühzeitiges Erkennen von Verzögerungs- oder Systemstillstandsrisiken. In einer möglichen Ausführungsform umfasst das Entnahmehandlingmodul eine Sensorik, welche zwischen dem Entnahmehandlingmodul und der Entnahmevorrichtung angeordnet ist, die insbesondere die Annäherung der jeweiligen Waren erfasst und diese Information einer Steuereinheit zuführt. Mittels der Sensorik kann die Warenzuführung, die Entnahmevorrichtung und/oder das Entnahmehandlingmodul kurzfristig angehalten werden oder in eine Bereitstellung gebracht werden, damit die Weitergabe der Waren an das Entnahmehandlingmodul reibungslos erfolgt. Eine Weitergabe der Waren ist nur dann möglich, wenn das nächste Mitglied zur Förderung bereitsteht, insbesondere in Hinsicht auf die Warenaufnahme- und Bewegungselemente.

Ein erfindungsgemässes Kontrollmittel des Entnahmehandlingmoduls kann in einer einfachen Ausführung eine Kamera umfassen, wobei ein Lagermitarbeiter die Vorgänge vor Ort beim Entnahmehandlingmodul mittels der Kamera verfolgen und bei Bedarf mittels der Steuerungseinheit steuern kann. In alternativen Ausführungen umfassen die Kontrollmittel Sensoren, beispielsweise RFID-Sensoren, welche Waren identifizieren können, und einen Alarm auslösen können, falls eine Ware für einen falschen Auftrag zugeführt ist. In noch einer weiteren Ausführungsform umfassen die Kontrollmittel Zähler, mit welcher die Waren nach Anzahl direkt in die Warenaufnahmeelemente abgefüllt und gelagert werden können. In noch weiteren alternativen Ausführungsformen kann ein Kontrollmittel ein Annäherungssensor sein, welcher die Position einer Fördereinheit erfassen kann und somit die Weitergabe von Waren von dem Entnahmehandlingmodul an die Fördereinheit freigeben kann. Weitere geeignete Ausführungsformen sind dem Fachmann naheliegend.

In einer vorteilhaften Ausführungsform einer erfindungsgemässen Vorrichtung ist das Entnahmehandlingmodul als ein Puffersystem, insbesondere ein Puffer-Karussell, ausgebildet.

In einer alternativen Ausführung der vorliegenden Erfindung ist das Entnahmehandlingmodul als ein dynamisches Sortier-Puffersystem ausgebildet. Ein derartiges System weist Möglichkeiten auf, Waren von der Entnahmestelle der Entnahmevorrichtung zu entnehmen, sortieren und bis zur Weiterförderung zu puffern. Dies kann beispielsweise in Form eines vertikal und/oder horizontal umlaufenden Pufferkarussells verwirklicht werden. In einer einfachen Ausführung umfasst das Pufferkarussell ein Bewegungselement in Form einer Schiebereinheit und mindestens ein Warenaufnahmeelement, welches nach Befüllung bis zur Weiterförderung durch die Fördereinheit zur Seite geschoben und gepuffert wird, sodass die für einen nächsten Auftrag bestimmten Waren der Entnahmevorrichtung entnommen werden können.

Dadurch wird gezielt ermöglicht, dass die Entnahmevorrichtung Waren sicher weitergeben kann, ohne in einen blockierten Zustand zu kommen oder dass in unerwünschter Weise Waren einer ersten Kommission mit einer nachfolgenden Kommission vermischt würden. Die Anzahl Pufferstellen pro Entnahmehandlingmodul wird dabei bevorzugt in Abhängigkeit der an der verbundenen Entnahmevorrichtung geforderten Leistung bzw. Pufferkapazität vorgegeben, wobei nicht alle Entnahmehandlingmodule dieselbe Anzahl Pufferstellen oder überhaupt ein Puffersystem umfassen müssen.

Aus der hiesigen Beschreibung geht hervor, dass ein erfindungsgemässes Entnahmehandlingmodul verschiedene oder eine Mehrzahl Funktionen innerhalb eines Logistiksystems aufweisen kann. Einerseits dient das Entnahmehandlingmodul dazu die Kommissionierung von Waren nach dem Entladen durch eine Entnahmevorrichtung und vor dem Verpacken/ Versand zu optimieren. Andererseits oder ergänzend hat das Entnahmehandlingmodul eine Wartefunktion, wobei leere Warenaufnahmeelemente und/oder für spätere Aufträge bestimmte Waren in Warenaufnahmeelementen in einem Wartezustand bereitgestellt werden. Dies ermöglicht einen kontinuierlichen Betrieb mit minimalem Verzögerungs- oder Unterbruchsrisiko, da die Vorrichtung eine unterbrechungsfreie Bearbeitung von Aufträgen ermöglicht.

Ein nachträgliches Einbringen von Auftragsanforderungen ist ebenfalls eine bevorzugte Funktion des Entnahmehandlingmoduls. Auf diese Weise kann ein Umordnen der Waren oder ein Hinzufügen bzw. Entfernen einzelner Waren aus einem Auftrag ermöglicht werden. Letztlich ist ein intelligenter Betrieb des Entnahmehandlingmoduls möglich, da das Entnahmehandlingmodul mit den restlichen Komponenten eines Logistiksystems, insbesondere der Warenzuführung, der Entnahmevorrichtung und der Fördereinheiten, verbunden werden kann und ein Informationsaustausch zwischen den jeweiligen Komponenten erfolgen kann. Das Entnahmehandlingmodul hat somit einen direkten Einfluss auf die Struktur der Auftragsabwicklung, aber ergänzt bzw. erweitert diese relevant.

Von dem Entnahmehandlingmodul werden die Waren an eine nachgeschaltete Fördereinheit weitergegeben. Die Fördereinheit fördert die Waren anschliessend weiter an einen Versandraum und/oder eine Speditionsstelle. Die Fördereinheit kann hierbei ebenfalls Warenaufnahmeelemente aufweisen, es ist jedoch auch in einer alternativen Ausführung möglich, dass die Warenaufnahmeelemente des Entnahmehandlingmoduls von der Fördereinheit übernommen werden.

In einer besonders geeigneten Ausführungsvariante, wird eine Fördereinheit direkt von einem oder mehreren Fördersystemen mit Waren beladen. Nebst der Weitergabe von Waren durch das Entnahmehandlingmodul an die Fördereinheit, können somit Waren direkt von dem Fördersystem an die Fördereinheiten übergeben werden. So kann ein Fördersystem, beispielsweise in Form eines horizontalen Sortier-Arrays, Hänge-, Liege- , Schalen-, Rollen-, Trog- oder Quergurtförderers, Waren in ein Warenaufnahmeelement der Fördereinheit nach der Warenübergabe durch das Entnahmehandlingmodul hinzufügen. Das Fördersystem ist hierbei nicht auf die hier aufgelisteten Förderlösungen beschränkt. Es ist auch ausserdem denkbar, dass die mehreren Fördersysteme eigenständig ausgebildet sind und Waren der dem Entnahmehandlingmodul nachgeschalteten Fördereinheit übergeben können. Aus der obigen Beschreibung ist ersichtlich, dass eine kommissionsgerechte Ergänzung von Waren an nahezu jeder Stelle einer erfindungsgemässen Vorrichtung zur Kommissionierung von Waren möglich ist und diese daher den unterschiedlichen Betriebs- und Auftragsanforderungen gerecht werden kann.

In einer vorteilhaften Ausführungsform einer erfindungsgemässen Vorrichtung umfasst die Fördereinheit eine mobile Trägereinheit und mindestens eine Manipulationsvorrichtung zur Handhabung der Waren und/oder zur Weitergabe der Waren an einen Versandraum und/oder eine Speditionsstelle.

Besonders vorteilhaft ist bei einer solchen erfindungsgemässen Vorrichtung die Manipulationsvorrichtung auf der Trägereinheit angeordnet.

Im Rahmen der Handhabung können die Waren von der Manipulationsvorrichtung (während der Förderung durch die Fördereinheit) beispielsweise in gewünschter Weise gruppiert werden oder es können spezifische Bearbeitungsschritte erfolgen (wie ein Bedrucken oder Anbringen von Informationselementen an die betroffene Kommission oder einzelne Waren).

Dadurch kann der Transportweg für solche Manipulations- bzw. Bearbeitungsschritte genutzt werden, was eine zusätzliche Leistungserhöhung der erfindungsgemässen Lösung ermöglicht, indem die Transportzeit nach der Kommissionierung nutzbar wird für Arbeitsschritte.

In einer weiteren besonders vorteilhaften Ausführungsform der vorgenannten erfindungsgemässen Vorrichtung ist mindestens eine Manipulationsvorrichtung als ein passives Bewegungselement ausgebildet.

In einer anderen besonders vorteilhaften Ausführungsform der vorgenannten erfindungsgemässen Vorrichtung ist mindestens eine Manipulationsvorrichtung als ein aktives Bewegungselement ausgebildet.

Für die Weitergabe der Waren an den Versandraum oder direkt an die Spedition kann die Manipulationsvorrichtung in Form eines Abweisers bevorzugt aktive Ausstosselemente oder Wegfördermittel (z.B. angetriebene Rollen) aufweisen. Alternativ sind in bevorzugten Ausbildungen auch passive Bewegungselemente bei mindestens einzelnen Manipulationsvorrichtungen vorgesehen (z.B. eine neigbare Übergabefläche) oder auch passive Kugeltischflächen, von denen die Waren beim Versandraum oder der Spedition durch dort ortsfeste Mittel übernommen werden (z.B. Greifarme oder Schieber).

Vorteilhaft umfasst bei einer erfindungsgemässen Vorrichtung die Fördereinheit ein oder mehrere autonome Fahrzeuge, und/oder ist die Fördereinheit als autonomes Fahrzeug («Automated Guided Vehicle (AGV)») ausgebildet.

Ein oder mehrere Fahrzeuge können im Betrieb die verschiedenen Entnahmehandlingmodule bedienen.

Bei einer anderen vorteilhaften Ausführungsvariante einer erfindungsgemässen Vorrichtung enthält mindestens ein autonomes Fahrzeug eine Informationsverarbeitungseinheit, welche abhängig von einer von der Steuerungseinheit generierten Information ein oder mehrere Entnahmehandlingmodule ansteuert, und dort von diesen die Waren übernimmt und zu einem Versandraum und/oder zu einer Speditionsstelle transportiert.

Bei einer anderen vorteilhaften Ausführungsvariante einer erfindungsgemässen Vorrichtung enthält mindestens ein autonomes Fahrzeug eine Informationsverarbeitungseinheit, welche abhängig von softwaremässig generierten Information ein oder mehrere Entnahmehandlingmodule ansteuert, und dort von diesen die Waren übernimmt und zu einem Versandraum und/oder zu einer Speditionsstelle transportiert.

Beispielsweise können die softwaremässig generierten Informationen direkt an die Informationsverarbeitungseinheit der AGVs übertragen werden, wobei die Informationsverarbeitungseinheit mit dem Entnahmehandlingmodul mittels der Kommunikationsmittel kommuniziert und diese intelligent ansteuert. Eine herkömmliche AGV Fahrzeugsteuerung umfasst diverse Sensorik und Aktorik für das Zurechtfinden in der Einsatzumgebung und für die Kommunikation mit anderen AGVs und dem Entnahmehandlingmodul, bzw. der Warenzuführung und der Entnahmevorrichtung.

Die AGVs können einzeln oder mit sogenannter Schwarm-Intelligenz betrieben werden, wobei letztere einen regelmässigen Informationsaustausch zwischen den AGVs beinhaltet, was zu einer intelligenten Auftragsaufteilung führt. Unterschiedliche, dem Fachmann bekannte Rechnerstrukturen können hierbei zum Einsatz kommen.

Die Fördereinheit dient nebst der Weiterförderung der Waren an den Versandraum und/oder Speditionsstelle auch einer Pufferung der Waren. Durch diese zusätzliche Funktion können Waren nach Abholung durch die Fördereinheit von dem Entnahmehandlingmodul vor der Weitergabe an den Versandraum gepuffert werden. Dies ist nützlich in Situation, in welchen ein Warenstau oder ein Maschinenausfall bei dem Versandraum und/oder der Speditionsstelle vorliegt. In herkömmlichen Logistiksystemen würde sich eine Verzögerung bei dem Versandraum und/oder Speditionsstelle in einer Folgereaktion auf die restlichen Komponenten des Logistiksystems ausbreiten, da Puffersysteme nur als separate Einrichtungen ausgebildet sind und nicht wie in der vorliegenden Erfindung darüber hinaus durch die Entnahmevorrichtung, das Entnahmehandlingmodul und die Fördereinheiten ermöglicht wird.

Eine erfindungsgemässe Fördereinheit kann in unterschiedlichen Varianten Waren zu einem bestehenden Auftrag hinzufügen. Zum Beispiel kann bei nachfolgender Feststellung, dass eine Ware in einem bereits von dem Entnahmehandlingmodul für einen Auftrag an die nachgeschaltete Fördereinheit abgegebenen Warenaufnahmeelement fehlt, die Fördereinheit an eine spezielle Verarbeitungsstation fahren, an welcher die fehlende Ware des Auftrags hinzugefügt wird.

Die spezielle Verarbeitungseinheit kann hierbei eine einfache Zwischenstation sein, an welcher eine Person oder eine maschinengesteuerte Vorrichtung die fehlende Ware hinzufügt bzw. entfernt, oder eine weitere komplexere Warenzuführung mit integrierter Förderanlage. Eine Abholung von fehlenden Waren eines Auftrags kann auch vor der Ankunft der Fördereinheit bei dem Entnahmehandlingmodul erfolgen. Die genaue Abwicklung der Abholung fehlender Waren ist mittels der Steuerungseinheit konfigurierbar.

In einer weiteren Ausführungsform weist die Verarbeitungseinheit ausserdem eine Puffermöglichkeit auf oder ist als ein oder mehrere Puffereinheiten ausgestaltet. Eine entsprechende Puffereinheit kann auf diese Weise in die Verarbeitungseinheit integriert sein oder der Verarbeitungseinheit als separates Modul zugeordnet sein.

Somit können Waren von einer Fördereinheit nach der Entnahme der Waren von dem Entnahmehandlingmodul und vor der Übergabe der Waren an den Versandraum oder die Speditionsstelle zusätzlich gepuffert werden. Mittels der Steuerung kann in Verbindung mit dieser zusätzlichen Pufferung in vorteilhafterweise erreicht werden, dass die Fördereinheiten je schnell entladen werden können und für die nächste Bedienung einer Entnahmestelle oder eines Entnahmehandlingmoduls verfügbar sind.

In einer alternativen Betriebsweise können die Fördereinheiten die Waren gesteuert an unterschiedliche Pufferstellen abgeben.

Die Eingliederung einer zusätzlichen Puffermöglichkeit nach der Entnahme der Waren von dem Entnahmehandlingmodul durch die Fördereinheit und vor der Übergabe der Waren an den Versandraum oder die Speditionsstelle, trägt weiter dazu bei, dass anhand einer erfindungsgemässen Vorrichtung ein dynamisches und auftragsorientiertes Kommissionieren von Waren möglich ist.

Beispielsweise können bei einem Feststellen, dass ein Auftrag, welcher bereits von einer Fördereinheit übernommen wurde, erst zu einem späteren Zeitpunkt versandt werden soll, Waren in die Puffereinheit der Verarbeitungseinheit überführt werden. Somit können die Fördereinheiten kontinuierlich zur Verfügung gestellt werden, auch bei Veränderungen der Auftragsanforderungen. Ebenfalls können Warenstaus und Ausfälle verhindert werden, da die Förderkapazität des Fördersystems als Ganzes praktisch unverändert bleibt oder erhöht wird.

Insbesondere ermöglicht eine erfindungsgemässe Vorrichtung eine Optimierung der Anlagenauslastung rund um die Uhr. Es besteht bei Intralogistik-Anlagen in jeweiligen Betriebssituationen ein Bedarf zum Vorkommissionien von Waren, vor allem in Perioden mit Spitzenauslastungen der Anlage. Um solchen hohen Betriebsanforderungen und Belastungen nachzukommen, ist eine effiziente Bereitstellung notwendig, welche zu geschäftigen Zeiten erfindungsgemäss mittels des Vorkommissionierens von Waren erreicht wird. Die Vorkommissionierung findet hierbei in der Nacht (oder anderen Zeiten mit reduziertem Bedienpersonalbestand) statt, was zusätzliche Automatisierungsanforderungen mit sich bringt, da die Intralogistik-Anlagen über Nacht nicht oder zumindest nicht vollständig von Mitarbeitenden überwacht werden können. Aus der obigen Beschreibung geht hervor, dass die vorliegende Pufferlösung diese Problematik überwindet, nämlich durch die Vollautomatisierung mittels der Vorkommissionierung und entsprechender, kommissionsfertiger Pufferung von Waren, die hier mittels den Fördereinheiten und einer nachgeschalteten Pufferung erreicht wird.

Vorteilhaft weist bei einer erfindungsgemässen Vorrichtung eine Fördereinheit im Haltebereich für die kommissionierten Waren langgezogene, feste oder bewegliche Halteelemente, insbesondere Rippenelemente oder Rippenlinien auf, um die Waren während des Förderwegs positioniert zu halten.

In einer besonders bevorzugten Ausgestaltung sind solche Rippen mindestens umlaufend der Auflagefläche der Fördereinheit angeordnet. Weitere alternative Arretierungs- oder Stoppelemente sind dem Fachmann bekannt, so insbesondere Haltestifte, Gummierungen der Oberflächen der Warenaufnahme- und/oder Bewegungselemente, auf- und absenkbare Ränder der Warenaufnahme- und/oder Bewegungselemente, hier allgemein als Haltemittel bezeichnet, welche bei der Übergabe der Waren an den Versandraum und/oder der Speditionsstelle durch einfache Krafteinwirkung überwindbar sind.

In besonderen Fällen können die Waren vom Entnahmehandlingmodul von einem Lagermitarbeiter übernommen werden, welcher die Waren direkt an die Speditionsstelle übergibt. In diesem Fall umfasst die Fördereinheit lediglich den Lagermitarbeiter.

Ein weiterer Aspekt der vorliegenden Erfindung betrifft ein Verfahren zur Kommissionierung von Waren, umfassend die Verfahrensschritte:
- Bereitstellen einer Warenzuführung, insbesondere mit einer Sortier- und Förderanlage;
- Entladen von Waren durch eine Entnahmestelle einer Entnahmevorrichtung;
- Übergeben der Waren von der Entnahmevorrichtung an ein Entnahmehandlingmodul; und
- Weitergeben der Waren von dem Entnahmehandlingmodul an eine nachgeschaltete Fördereinheit mittels mindestens eines Bewegungselements des Entnahmehandlingmoduls.

Durch das vorliegende Verfahren ist es möglich, Waren nach Förderung in einer Förderanlage und nach einem Entladen bei einer Entnahmevorrichtung anhand des Entnahmehandlingmoduls zu kommissionieren und zu puffern. In herkömmlichen Verfahren werden Waren direkt von einer Entladestelle an eine Tragevorrichtung übergeben, wobei jeweils eine Tragevorrichtung bereitstehen muss um Waren, welche für einen bestimmten Auftrag vorgesehen sind, abzuholen. Es bestehen keine Puffermöglichkeiten bei der Entladestelle bis zur Abholung durch die Tragevorrichtung, sodass es häufig zu Verzögerungen und Staubildung kommt.

Bei einer vorteilhaften Ausführungsvariante eines erfindungsgemässen Verfahrens erfolgt das Entladen der Waren durch die Entnahmestelle mittels einer ersten Zuführeinheit.

Eine Zuführrutsche repräsentiert eine mögliche Ausführungsform einer erfindungsgemässen Zuführeinheit, wobei die Waren direkt von der Entnahmestelle oder von einer Förderanlage entlang der Zuführrutsche die Entnahmevorrichtung erreichen.

Das Übergeben der Waren an das Entnahmehandlingmodul erfolgt bei einem erfindungsgemässen Verfahren vorteilhaft mittels einer zweiten Zuführeinheit.

Die erste und zweite Zuführeinheiten können identisch ausgebildet sein, können aber in besonderen Ausführungsformen auch unterschiedlich ausgebildet sein. So ist es gezielt möglich, die erste Zuführeinheit als Zuführrutsche und die zweite Zuführeinheit als Förderer oder Ausstosselement zu realisieren, oder umgekehrt.

Bei einem erfindungsgemässen Verfahren sind vorteilhaft die Entnahmevorrichtung, das Entnahmehandlingmodul sowie mindestens eine Fördereinheit der Warenzuführung fördertechnisch verbunden; und ist das Verfahren mittels einer Steuerungseinheit des Entnahmehandlingmoduls steuerbar.

Die Entnahmevorrichtung, das Entnahmehandlingmodul sowie die Fördereinheit sind dabei fördertechnisch miteinander verbunden. Mittels einer Steuerungseinheit des Entnahmehandlingmoduls kann das Verfahren gesteuert und angepasst werden, in einer möglichen Ausführungsform kann dies auch automatisiert erfolgen.

Bei einem erfindungsgemässen Verfahren erfolgt vorteilhaft das Weitergeben der Waren an eine nachgeschaltete Fördereinheit mittels passiven Bewegungselementen, insbesondere schwerkraftbedingt, und/oder mittels aktiven Bewegungselementen.

Wie bereits vorstehend beschrieben, können die erfindungsgemässen Bewegungselemente als passive oder aktive Bewegungselemente ausgestaltet werden. Bei einer möglichen passiven Ausgestaltung ist das Bewegungselement des Entnahmehandlingmoduls eine Auflagefläche, welche durch ein Neigen der Auflagefläche die zu verarbeitenden Waren, nach einstellbarer Neigung der Fläche, dazu veranlasst, durch blosse Schwerkraft von der Auflagefläche abzurutschen.

Die Neigung der Auflagefläche erfolgt vorteilhafterweise in Reaktion darauf, dass die Fördereinheit einen vorgegebenen Übergabepunkt erreicht, wobei der Übergabepunkt anhand geeigneter Sensorik an dem Entnahmehandlingmodul und/oder der Fördereinheit ermittelbar ist. Eine alternative aktive Ausgestaltung der Bewegungselemente ist ein Schieber, welche die Waren von dem Entnahmehandlingmodul auf die Fördereinheit schiebt, ebenfalls in Reaktion darauf, dass die Fördereinheit einen vorgegebenen Übergabepunkt erreicht.

Letztlich betrifft ein weiterer Aspekt der vorliegenden Erfindung ein System zur Kommissionierung von Waren. Das System weist Mittel zur Ausführung der Schritte des erfindungsgemässen Verfahrens auf.

Ein erfindungsgemässes System umfasst
- eine Wareneingangseinheit mit einer Warensteuerungseinheit zum Bereitstellen von Waren;
- eine erste Fördereinrichtung zum Entnehmen der Waren von der Warenzuführung;
- eine zweite Fördereinrichtung zum Überführen der Waren an einen Versandraum und/oder eine Speditionsstelle; und
- mindestens eine Schnittstelle zur dynamischen Kommissionierung der Waren, wobei die mindestens eine Schnittstelle zwischen der ersten und der zweiten Fördereinrichtung angeordnet ist.

Die Wareneingangseinheit mit der Warensteuerungseinheit, die erste und zweite Fördereinrichtung sowie die Schnittstelle sind fördertechnisch miteinander verbunden, wobei die Wareneingangseinheit mit der Warensteuerungseinheit bevorzugt als eine erfindungsgemässe Warenzuführung ausgeführt ist.

Die erste Fördereinrichtung eines erfindungsgemässen Systems ist in einer bevorzugten Ausführungsform eine erfindungsgemässe Entnahmevorrichtung.

In einer vorteilhaften Ausführungsform eines erfindungsgemässen Systems zur Kommissionierung von Waren umfasst die erste Fördereinheit eine Förderanlage, insbesondere ein Fördersystem, ein Förderband und eine Befülleinheit.

Mit der Förderanlage werden die Waren von der Warenzuführung übernommen und auftragsorientiert an die Schnittstelle weitergefördert.

In einer anderen vorteilhaften Ausführungsform eines erfindungsgemässen Systems zur Kommissionierung von Waren ist eine zweite Fördereinrichtung als eine Fördereinheit ausgebildet, wie sie obenstehend für die erfindungsgemässe Vorrichtung besprochen worden ist.

Eine solche Fördereinheit kann insbesondere ein autonomes Fahrzeug (AGV) sein.

In einer weiteren vorteilhaften Ausführungsform eines erfindungsgemässen Systems zur Kommissionierung von Waren ist eine Schnittstelle als ein Entnahmehandlingmodul ausgebildet, wie es obenstehend für die erfindungsgemässe Vorrichtung besprochen worden ist.

Ein erfindungsgemässes System zur Kommissionierung von Waren umfasst in einer weiteren vorteilhaften Ausführung eine Warenausgangseinheit für den Rücktransport von fehlerhafter, beschädigter oder markierter Waren.

Markierte Waren können beispielsweise Waren sein, welche aus einem Auftrag zu einem späteren Zeitpunkt entfernt wurden, oder aus sonstigen Gründen von einer Weiterförderung ausgeschieden und daher physisch und/oder digital (bevorzugt mit einem RFID Tag) markiert werden.

Vorteilhaft umfasst ein erfindungsgemässes System mindestens ein Lagersystem und/oder eine zusätzliche Puffereinheit.

Das Lagersystem dient hierbei als Langzeitlager und die Puffereinheit fungiert im vorliegenden Sinne als ein Kurzzeitlager mit Sortierfunktionen.

Für den Fachmann ist es selbstverständlich, dass alle beschriebenen Ausführungsformen in einer erfindungsgemässen Ausgestaltung der vorliegenden Erfindung verwirklicht sein können, sofern sie sich nicht explizit gegenseitig ausschliessen.

Im Folgenden wird die vorliegenden Erfindung nun anhand konkreter Ausführungsbeispiele und Figuren näher erläutert, ohne jedoch auf diese beschränkt zu sein.

Durch das Studium dieser besonderen Ausführungsformen und Figuren können sich für einen Fachmann weitere vorteilhafte Ausführungen der vorliegenden Erfindung ergeben.

### Beschreibung der Figuren

Zum besseren Verständnis der vorliegenden Erfindung wird nachfolgend auf die Figuren Bezug genommen. Diese zeigen einzelne Ausführungsbeispiele des Erfindungsgegenstands, die nicht so zu verstehen sind, dass die Erfindung auf die hierin offenbarten spezifischen Merkmale beschränkt wäre.

Für gleiche oder gleich wirkende Teile werden in den nachfolgenden Figuren und der dazugehörigen Beschreibung gleiche oder analoge Bezugszeichen verwendet.
- Figur 1: zeigt schematisch eine erfindungsgemässe Vorrichtung zur Kommissionierung von Waren.
- Figur 2: zeigt eine schematische Darstellung einer Entnahmevorrichtung, eines Entnahmehandlingmoduls und einer Fördereinheit der erfindungsgemässen Vorrichtung.
- Figur 3: zeigt eine vorteilhafte Ausführungsform einer erfindungsgemässen Vorrichtung sowie eine mit der Vorrichtung verbundenen Förderanlage.
- Figur 4: zeigt eine vorteilhafte Ausführungsform einer erfindungsgemässen Vorrichtung mit einem alternativen Entnahmehandlingmodul sowie eine mit der Vorrichtung verbundenen Förderanlage.
- Figur 5: zeigt eine vorteilhafte Ausführungsform einer erfindungsgemässen Vorrichtung mit einem weiteren alternativen Entnahmehandlingmodul sowie eine mit der Vorrichtung verbundenen Förderanlage.
- Figur 6: zeigt eine vorteilhafte Ausführungsform einer erfindungsgemässen Vorrichtung mit einem Entnahmehandlingmodul in Form eines Pufferkarussells.
- Figur 7: a) bis c) zeigen eine vorteilhafte Ausführungsform einer erfindungsgemässen Vorrichtung mit einem Entnahmehandlingmodul in Form eines Kipptisches mit Annäherungssensor und/oder einer Betätigungsvorrichtung zum Steuern des Schwenktisches.
- Figur 8: a) und b) zeigen eine vorteilhafte Ausführungsform einer erfindungsgemässen Vorrichtung mit einem Entnahmehandlingmodul in Form eines Kipptisches mit einer durch das AGV aktivierbarer Rückstellfeder.
- Figur 9: zeigt schematisch ein erfindungsgemässes System zur Kommissionierung von Waren in Verbindung mit verschiedenen Teilsystemen.
- Figur 10: zeigt eine Fördereinheit mit einem höhenverstellbaren Rahmen.
- Figur 11: zeigt eine Fördereinheit mit einer abhebbare Stiftmatrize.
- Figur 12: zeigt eine Fördereinheit mit absenkbare Rollen.

### Wege zur Ausführung der Erfindung

Für den Fachmann erschliessen sich aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Diese können insbesondere darin liegen, dass einzelne Komponenten durch dem Fachmann bekannte, gleichwirkende Elemente oder Verfahrensschritte ersetzt werden. Zusätzlich wird in der Beschreibung auf Druckschriften verwiesen, deren Offenbarungsgehalt hiermit in deren Gesamtheit durch Referenz in die Beschreibung mit aufgenommen gilt. Ebenso sind konstruktive, dem Fachmann bekannte Anlageverbindungen, als von der Erfindung mit umschlossen zu verstehen.

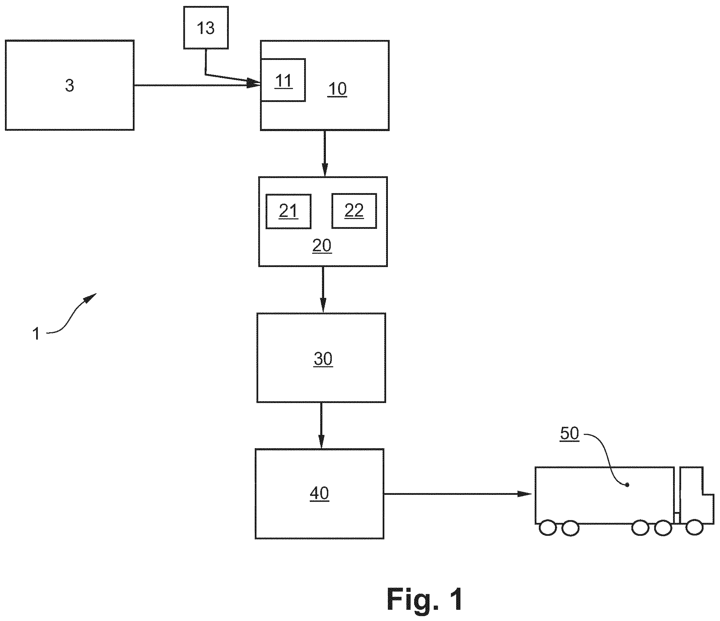

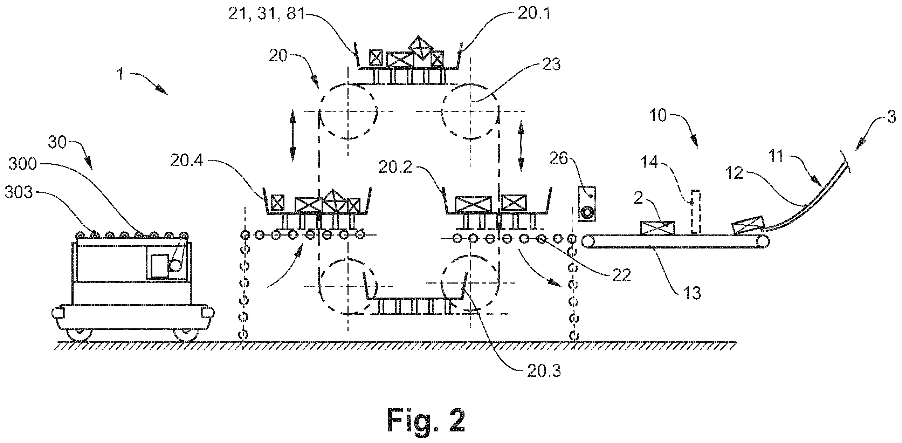

**Figuren 1** **und** **2** zeigen eine erfindungsgemässe Vorrichtung 1 zur Kommissionierung von Waren 2, wobei Figur 1 die in den weiteren Abbildungen vertieft beschriebenen, wesentlichen Systemkomponenten schematisch aufzeigt. Die erfindungsgemässe Vorrichtung 1 umfasst in der dargestellten Ausführung eine Entnahmevorrichtung 10, welche mindestens eine Entnahmestelle 11 aufweist zum Entladen bzw. Übernehmen von

Waren. Der Entnahmevorrichtung 10 werden im Ausführungsbeispiel nach Figur 2 die kommissionierten Waren 2 (Figur 2) über eine bekannte, einleitend erwähnte Warenzuführung 3 oder auch andere herkömmliche Warenzuführungen zugeführt. Diese kann systemtechnisch aus einem einfachen oder komplexen Fördersystem bestehen oder im Bereich der Entnahmestelle 11, falls gewünscht, auch mehr als eine einzelne Zuführung haben (z.B. zwei separate Bandförderer oder zwei unterschiedliche Fördersysteme für unterschiedliche Waren, im Falle separater Förderwege für solche unterschiedliche Waren). Dem Fachmann ist bekannt, dass solche Warenzuführungen bevorzugt Liege- oder Hängeförderer umfassen oder alternativ auch andere Förderelemente, wie z.B. einen Bedienroboter zur Abgabe besonderer Einzelgüter an die Entnahmestelle 11. Die Entnahmestelle 11 verfügt vorteilhafterweise über eine Zuführeinheit 12, welche sicherstellt, dass die Waren korrekt von der Entnahmestelle 11 an die Entnahmevorrichtung 10 übergeben werden. Dies kann bevorzugt eine Gleitrampe, ein Übergangsrollenförderer oder ein Leitblech sein. Die Waren können der Entnahmevorrichtung 10 als bereits kommissionierte Warenzusammenstellung übergeben werden, oder dieser sequenziell zugeführt werden, sodass auf bzw. in der Entnahmevorrichtung 10 eine Kollektion von Waren bereitgestellt wird. Von der Entnahmevorrichtung 10 wird dann die Kollektion von Waren (oder auch nur eine Teilkollektion von Waren oder einzelne Waren) an ein nachgeschaltetes Entnahmehandlingmodul 20 überführt, wie weiter unten näher beschrieben wird.

Die Entnahmevorrichtung 10 kann, wie beispielsweise in Figur 2 gezeigt, eine Bandförderer sein, oder aber auch ein Entnahmetisch mit optionalen Pushern 14 (oder einem oder mehreren Greifern/Greifarmen bzw. umlaufenden Mitnehmern oder ähnliche dem Fachmann bekannte Mittel) zur Bewegung und/oder der optimierten Anordnung (z.B. vorzugsweisen Verdichtung) der Waren im Bericht der Entnahmevorrichtung 10. Ausserdem weist eine erfindungsgemässe Entnahmevorrichtung 10 in der in Fig. 2 gezeigten Ausführungsform einen Sensor 26, insbesondere einen Annäherungssensor, auf. Mit diesem Annäherungssensor 26 kann bestimmt werden, ob sich Waren 2 in einer geeigneten Position für eine Weitergabe an das Entnahmehandlingmodul 20 befinden. Dabei kommt es vorteilhafterweise zu einem Informationsaustausch zwischen dem Sensor 26 und einer zentralen Steuereinheit, oder auch der Steuerungseinheit 26 des Entnahmehandlingmoduls 20. Nach einem Bestimmen, dass sich Waren 2 an einem geeigneten Übergabepunkt befinden, kann ein Signal vom dem Sensor 26 an die Steuereinheit und von dieser an das Entnahmehandlingmodul 20 übermittelt werden, woraufhin eine Weitergabe der Waren 2 an das Entnahmehandlingmodul 20 erfolgt.

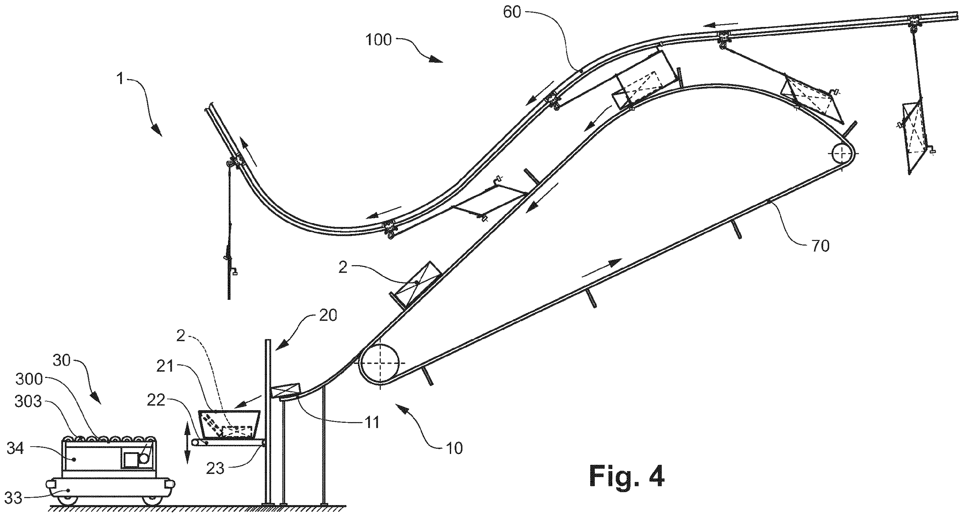

Der Entnahmevorrichtung 10 ist nun das für die Erfindung bedeutsame Entnahmehandlingmodul 20 nachgeschaltet. Dieses ist dazu ausgebildet verschiedene für die Kommissionierung der Waren 2 geeignete Funktionen auszuführen und gleichzeitig eine Interface-Funktion für den Weitertransport der Waren 2 mittels der Fördereinheiten 30 zu ermöglichen. Diese Funktionen können, wie im Ausführungsbeispiel nach Figur 4 gezeigt, nur eine vergleichsweise einfache Adaptionsfunktionalität umfassen (dort eine Höhenverstellbarkeit zur Anpassung an die Entnahmehandlingmodule 20) bis hin zu wesentlichen Zusatzfunktionen, wie beispielsweise in Figur 2 gezeigt, eine Pufferlösung mit umlaufenden Warenaufnahmen 21.1-21.4. Verschiedene im Zusammenhang mit den Ausführungsbeispielen hier beschriebene Funktionen der Entnahmehandlingmodule 20 können für den Fachmann ersichtlich bevorzugt miteinander kombiniert werden.

In der Ausführungsform gemäss Figur 2 werden die Waren in Warenaufnahmeelementen 21, 31, 81 des Entnahmehandlingmoduls 20 transportiert. Das Entnahmehandlingmodul 10 weist hierbei mindestens ein Warenaufnahmeelement 21, 31, 81 zur Aufnahme der Waren 2 sowie ein Bewegungselement 22 zur Weitergabe der Waren 2 an eine nachgeschaltete Fördereinheit 30 auf. Die Entnahmestelle 11 der Entnahmevorrichtung 10 kann ferner Weichen umfassen, welche eine zusätzliche Sortierung der Waren 2 vor der Entnahme durch das Entnahmehandlingmodul 20 ermöglichen.

Das Entnahmehandlingmodul 20 dient zur auftragsorientierten Kommissionierung, Sortierung und Pufferung der Waren 2 nach dem Entladen durch Entnahmestelle 11 der Entnahmevorrichtung 10 und vor dem Weiterfördern der Waren 2 an ein Versandraum 40 durch die Weitefördervorrichtung 30 und anschliessend an eine Speditionsstelle 50, insbesondere ein Speditionsfahrzeug. Das Entnahmehandlingmodul 20 ist in einer vorteilhaften Ausführung mit Einstellmitteln 23 ausgestattet, wobei die Einstellmittel 23 eine Anpassung des Entnahmehandlingmoduls 20 an die Entnahmestelle 11 der Entnahmevorrichtung 10 und an die an das Entnahmehandlingmodul 20 nachgeschaltete Fördereinheit 30 ermöglichen (vertikal und/oder horizontal). Das Entnahmehandlingmodul 20 und/oder die Fördereinheit 30 weisen in weiteren alternativen Ausführungsformen Kontrollmittel 24, insbesondere Identifikationsmittel zur Identifikation der Waren 2 auf.

Nach dem Entnahmehandlingmodul 20 werden die Waren an eine nachgeschaltete Fördereinheit 30 übergeben, wobei die Fördereinheit 30 dazu dient, die Waren an ein Versandraum 40 zu fördern. Die Fördereinheit 30 kann ebenfalls Warenaufnahmeelemente 21, 31, 81 für die Waren 2 aufweisen. Vorteilhafterweise ist die Fördereinheit 30 als autonomes Fahrzeug realisiert, welche ein dynamisches, auftragsorientiertes Fördern der Waren 2 von und zu dem Entnahmehandlingmodul 20 oder an ein Versandraum 40 ermöglichen.

Der Versandraum 40 kann ein Lagerbereich sein, der als Zwischenlager- oder Puffer für die Übergabe an die eigentliche Spedition der kommissionierten Waren 2 an Transportfahrzeuge oder Speditionsunternehmen dient (Spedition 50 in Figur 1). Der Versandraum 40 besitzt Packplätze oder -stationen zum Verpacken der Stückgüter in Versandkisten und in besonderen Ausführungsformen vorzugsweise eine eigene Sortiereinheit, um die kommissionierten Waren 2 zu sortieren und/oder zu gruppieren, so dass diese für die Spedition vorbereitet und für den Destinationsort zusammengestellt sind. Dadurch wird erreicht, dass die Spedition der kommissionierten Waren 2 bereits im Bereich des Versandraums 40 effizient und optimiert für unterschiedliche Destinationsorte oder zum Verladen auf unterschiedliche Transportfahrzeuge gruppiert sind. Der Versandraum 40 kann dabei aus einer blossen Pufferstrecke (wie ein Verladeband) bestehen oder aber auch in alternativ bevorzugter Weise als umfassender.Lagerbereich ausgebildet sein, welcher der Zwischenspeicherung von Warenmengen für mehrere oder eine Vielzahl von Transportfahrzeugladungen dient oder auch der zeitlich gestaffelten Verladung von kommissionierten Waren 2.

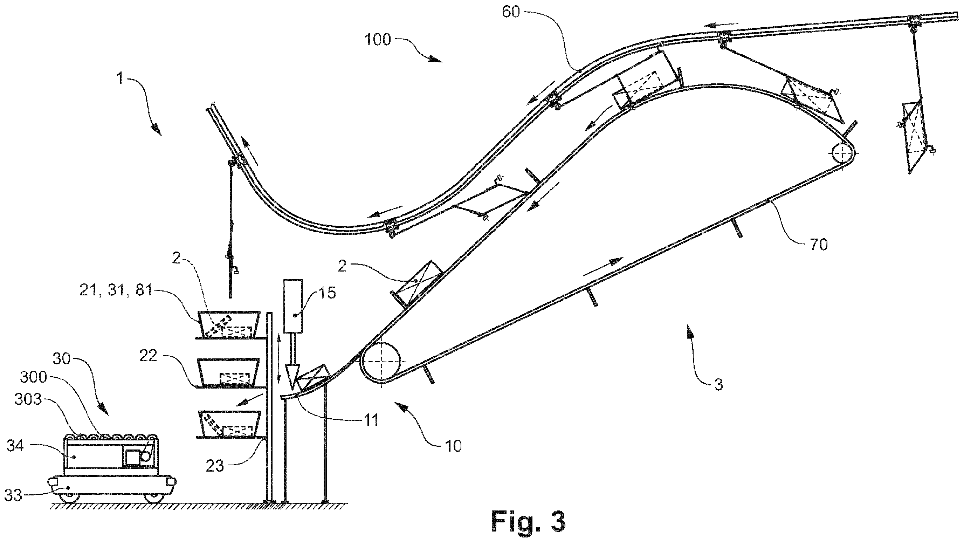

**Figuren 3 bis 5** zeigen eine erfindungsgemässe Vorrichtung 1, wobei die Warenzuführung 3 ein Fördersystem 60 und ein umlaufendes Förderband 70, welche zusammen eine Förderanlage bilden, umfasst. Das in Figuren 3 bis 5 gezeigte Beispiel einer Förderanlage ist beispielsweise in der WO 2018/142243 A1 des Anmelders offenbart.

Figuren 3 bis 5 zeigen zudem ein erfindungsgemässes Entnahmehandlingmodul 20, wobei die Höhe der Warenaufnahmeelemente 21, 31, 81 und somit der Übergabepunkt durch die Einstellmittel 23 des Entnahmehandlingmoduls 20 an die Höhe der Entnahmestelle 11 der Entnahmevorrichtung 10 und an die Höhe der Fördereinheit 30 angepasst werden können. Ferner können mehrere Waren 2 eines Auftrags in einem Warenaufnahmeelement 21, 31, 81 des Entnahmehandlingmoduls 20 von der Entnahmevorrichtung 10 übernommen werden und bis zur Wegförderung durch die Fördereinheit 30 gepuffert werden.

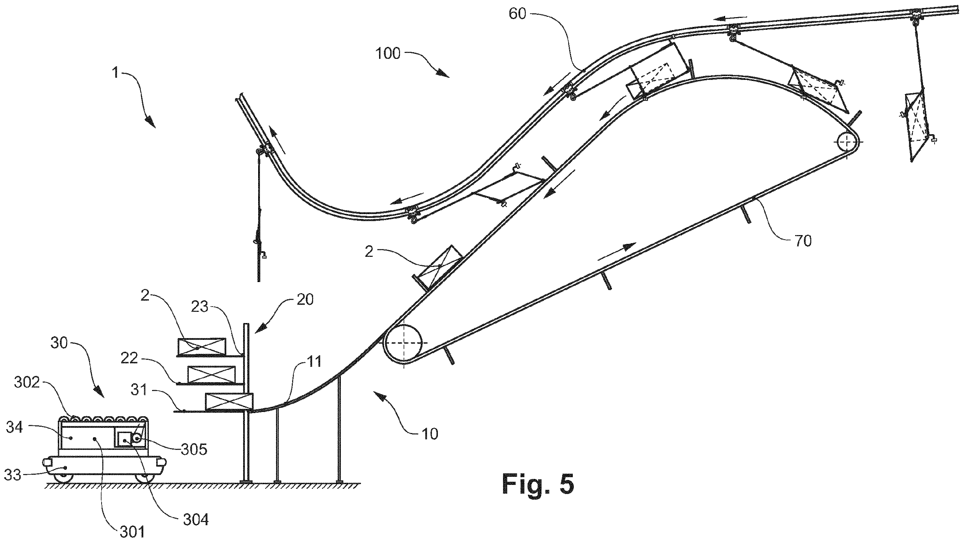

Das in **Figur 3** **und** **5** dargestellte Entnahmehandlingmodul 20 weist mehrere Warenaufnahmeelemente 21, 31, 81 auf, welche vertikal verstellbar sind. Die Waren 2 können somit bis zur Weitergabe an die Fördereinheit 30 vertikal gepuffert werden. Eine Übergabe der Waren 2 an die Fördereinheit 30 erfolgt in einer alternativen Ausführungsform mittels Bewegungselementen 22 in Form von Schiebern.

**Figuren 3** **und** **4** zeigen ein erfindungsgemässes Entnahmehandlingmodul 20, welches mindestens ein Warenaufnahmeelement 21, 31 81 aufweist sowie mindestens ein Bewegungselement 22, 32, wobei das Bewegungselement 22, 32 in den in Figur 3 und 4 dargestellten Beispielen in Form einer verstellbaren Aufnahmefläche ausgebildet ist. Die Fördereinheit 30 umfasst Bewegungselemente 22 sowie eine Trägereinheit 33.

Die Entnahmevorrichtung in **Fig. 3** weist ausserdem ein Stoppelement 15 auf. Dieses Stoppelement 15 hält die Waren nach der Zuführung durch die Entnahmestelle 11 an, sodass die Waren nicht willkürlich auf das Entnahmehandlingmodul 20 auftreffen, sondern gezielt an einem geeigneten Übergabepunkt übergeben werden können. Ausserdem verhindert das Stoppelement 15 ein Herunterfallen der Waren von der Entnahmevorrichtung. Das Stoppelement kann in möglichen Ausführungsformen als einfacher Stopper, Stift, einer Gummierung an der Oberflächen, absenk- und anhebbarer Rand oder weitere dem Fachmann bekannte Stopper-Lösungen ausgebildet sein.

**Figur 5** zeigt eine vorteilhafte Variante einer erfindungsgemässen Vorrichtung 1, wobei die Fördereinheit als autonomes Fahrzeug 30 mit integriertem Rollenförderer 302 realisiert ist. Der integrierte Rollenförderer 302 umfasst einen Motor 303 mit einem Laufrad 304, das über einen Keilriemen eine erste Förderrolle des Rollenförderers 302 antreibt und im Fahrzeuggehäuse 301 angeordnet ist. Die übrigen Förderrollen des Rollenförderers 302 werden von der ersten, angetriebenen Förderrolle, beispielsweise über einen Keilriemen, angetrieben. Wenn eine über die Zuführeinheit 12 in Form einer Zuführrutsche rutschende Ware 2 das autonome Fahrzeug 30 erreicht, das sich an einem Übergabepunkt am Ende der Zuführrutsche befindet, bewegen die angetriebenen Förderrollen die aufgenommene Ware 2 in die Mitte der durch die Vielzahl der Förderrollen gegebenen Auflagefläche. Vorteilhafterweise umfasst das autonome Fahrzeug 30 Sensorelemente zur Erfassung der Position einer Ware 2 auf dem Rollenförderer 302. Diese Daten ermöglichen eine integrierte Steuerung des autonome Fahrzeugs 30 und/oder des Rollenförderers 302 sowie die betätigten Förderrollen zu steuern und die Ware 2 auf dem autonomen Fahrzeug 30 zu positionieren. Das autonome Fahrzeug 30 mit Rollenförderer 302 mit der auf den Förderrollen aufliegenden Ware 2 kann anschliessend zu einem vorgesehenen Versandraum 40 fahren, wobei der (motorisierte) Rollenförderer 302 an diesem Versandraum 40 auch zum Entladen der Ware 2 genutzt werden kann. Die Warenaufnahmeelemente 31 sind in der in Fig. 5 dargestellten, einfachen Ausführungsform geeignete Oberflächen, auf welche die Waren direkt aufgelegt werden. Die Bewegungselemente 22 sind in der dargestellten Ausführung Neigungselemente, mit denen die Warenaufnahmeelemente 31 abwärts geneigt werden können, sodass die Waren schwerkraftbedingt auf die nachgeschaltete Fördereinheit 30 rutschen.

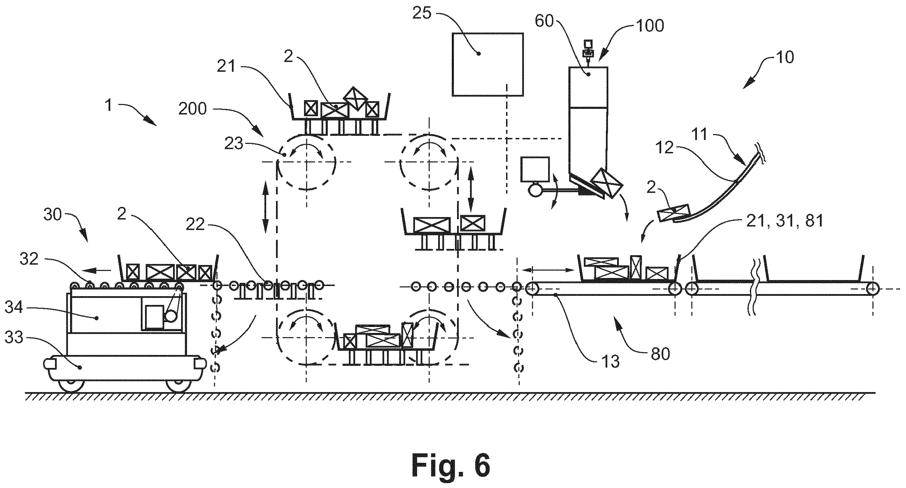

**Figur 6** zeigt eine vorteilhafte Ausführungsform einer erfindungsgemässen Vorrichtung mit einem Entnahmehandlingmodul 20 in Form eines Puffersystems 200, nämlich eines vertikalen Pufferkarussells. Die Warenzuführung 3 umfasst in der dargestellten Ausführung eine Förderanlage 100 mit einem schienengeführten Fördersystem 60 und die Entnahmevorrichtung 10 umfasst eine Entnahmestelle 11 sowie eine Befülleinheit 80. Figur 6 zeigt zwei mögliche Zuführvarianten von Waren 2 an die Befülleinheit 80, welche die Waren 2 vor der Weitergabe an das Entnahmehandlingmodul 20 in Warenaufnahmeelementen 21, 31, 81 auftragsorientiert sammelt und dementsprechend sortiert. Eine erste mögliche Zuführvariante ist ein direktes Entladen der Waren 2 von dem Fördersystem 60 an die Befülleinheit. Eine zweite mögliche Variante ist die Entnahme von Waren 2 durch die Befülleinheit 80 von der Entnahmestelle 11 der Entnahmevorrichtung 10. Die Befülleinheit 80 ist hier als horizontaler Förderer dargestellt. Die mit Waren 2 befüllten Warenaufnahmeelemente 21, 31, 81 werden anschliessend dem Pufferkarussell übergeben. Das Pufferkarussell puffert die Waren und hält sie bereit bis eine Fördereinheit, vorteilhafterweise in Form eines AGVs, die Waren abholt und weiterfördert. Das Pufferkarussell in Figur 6 weist Einstellmittel 23 in Form von Umlenkrollen auf. Ferner ist eine externe Steuerungseinheit des Entnahmehandlingmoduls zu sehen.

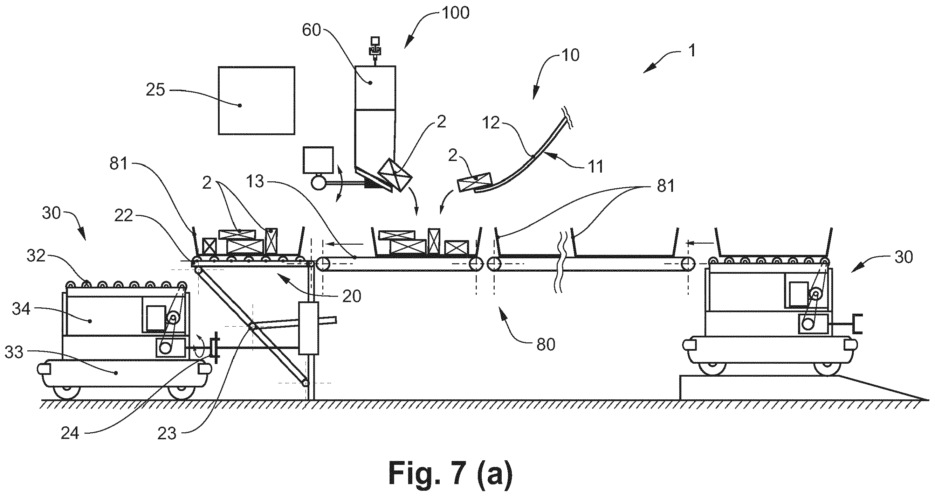

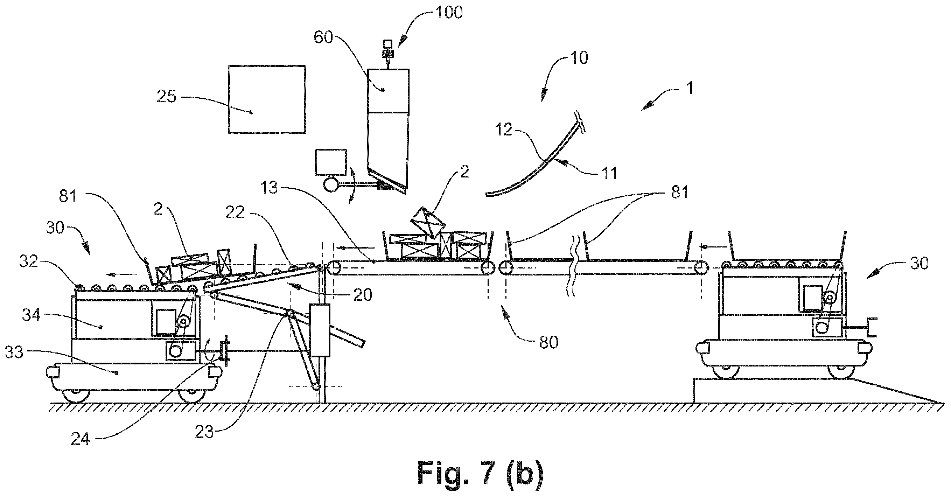

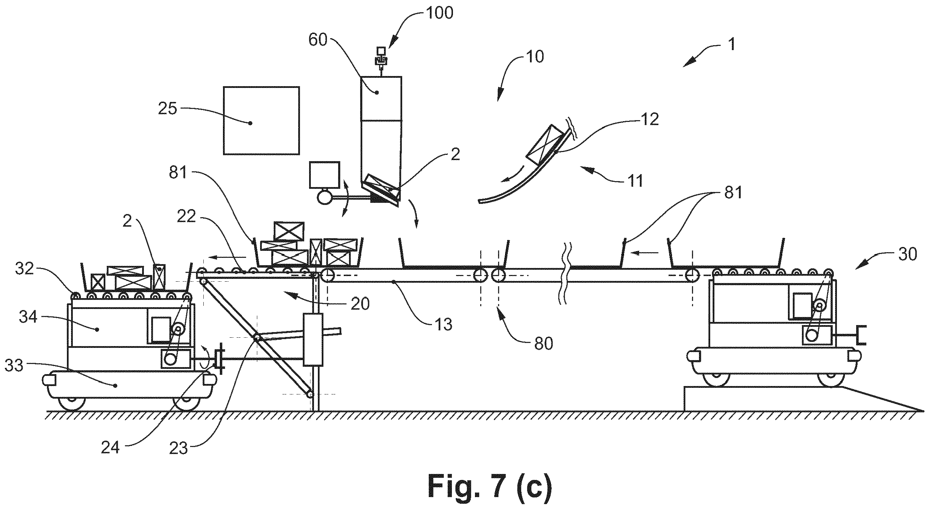

Figur 7 a) bis c) zeigen eine vorteilhafte Ausführungsform einer erfindungsgemässen Vorrichtung 1 mit einem Entnahmehandlingmodul 20 in Form eines Kipptisches mit Kontrollmittel 24 in Form eines Annäherungssensors. Gezeigt ist ein erfindungsgemässer Warenförderablauf vom Entladen durch die Entnahmevorrichtung 10, umfassend eine Entnahmestelle 11 mit Zuführeinheit 12, einer Förderanlange 100 mit einem Fördersystem 60 und eine Befülleinheit 80, zur Übergabe der Waren 2 an das Entnahmehandlingmodul 20, umfassend Einstellmittel 23 und Annäherungssensor 24 sowie einer Steuerungseinheit 25, bis hin zur Weitergabe der Waren 2 an eine Fördereinheit 30.

Leere Warenaufnahmeelemente 21, 31, 81 können in einer möglichen Ausführung von einer Fördereinheit 30 nach Förderung der Waren 2 an ein Versandraum 40 und/oder Speditionsstelle 50 zurück an die Befülleinheit 80 transportiert werden. Die als Förderer ausgebildete Befülleinheit 80 befördert die leeren Warenaufnahmeelemente 21, 31, 81 nach Zulieferung der leeren Warenaufnahmeelemente 21, 31, 81 durch eine Fördereinheit 30 zu der Entnahmestelle 11 und/oder Förderanlage 100 der Entnahmevorrichtung 10. Hier werden mittel den bereits genannten Zuführvarianten die Waren 2 in Warenaufnahmeelemente 21, 31, 81 auftragsorientiert entladen, woraufhin die mit Waren 2 befüllten Warenaufnahmeelemente 21, 31, 81 in Richtung des Entnahmehandlingmoduls 20 befördert werden.

Bei bevorzugten Lösungen für die Befülleinheit 80 weist diese einen zu- oder beigeordneten Puffer für die leer zugeführten Warenaufnahmeelemente 81 auf (Puffereinheit für die leeren Warenaufnahmeelemente 81). Dies ist vereinfacht durch die mehreren bereitstehenden Warenaufnahmeelemente 81 in Fig. 7(a) dargestellt. Dadurch wird vermieden, dass Wartezeiten bei der Entnahmestelle 11 entstehen, wenn dort eine kontinuierliche Warenübernahme erforderlich ist.

Das Entnahmehandlingmodul 20 aus Figuren 7 a) bis c) ist als Kipptisch ausgebildet. Der Kipptisch wird in Figuren 7 a) bis c) anhand eines Kontrollmittels 24 in Form eines Drehmotors betätigt. Der Drehmotor 24 umfasst hierbei eine Kontaktierungsstelle, welche bei Ansteuerung der Fördereinheit 30 an dem Entnahmehandlingmodul 20 eine entsprechende Kontaktierungsstelle der Fördereinheit kontaktiert und sich mit dieser koppelt. Daraufhin wird der Drehmotor durch die Steuerungseinheit 25 des Entnahmehandlingmoduls 20 freigegeben. Der Drehmotor 24 ist mit den Einstellmitteln 23 wirkmässig verbunden, sodass der Kipptisch geneigt wird und die Waren 2 in dem Warenaufnahmeelement 21, 31, 81 auf die Fördereinheit 30 rutschen. Nach der erfolgten Übergabe der Waren 2 an die Fördereinheit 30, entkoppelt sich die Fördereinheit 30 von dem Drehmotor 24 nach vorgängiger Rückstellung des Kipptisches. In einer weiteren möglichen Ausführungsform kann ein Kontrollmittel 24 in Form mindestens eines Annäherungssensors bei Ankunft einer Fördereinheit 30 die Einstellmittel 23 auslösen, sodass der Kipptisch in Abwärtsrichtung geneigt wird. Das mit Waren 2 befüllte Warenaufnahmeelement 21, 31, 81 gleitet daraufhin entlang den Bewegungselementen 22 des Entnahmehandlingmoduls 20 auf die Manipulationsvorrichtung 32 der Fördereinheit 30. Sobald die Fördereinheit 30 das Entnahmehandlingmodul 20 verlässt, erfolgt ein Rückstellen des Kipptisches in eine waagerechte Position zur weiteren Entnahme von Waren 2 von der Entnahmevorrichtung 10.

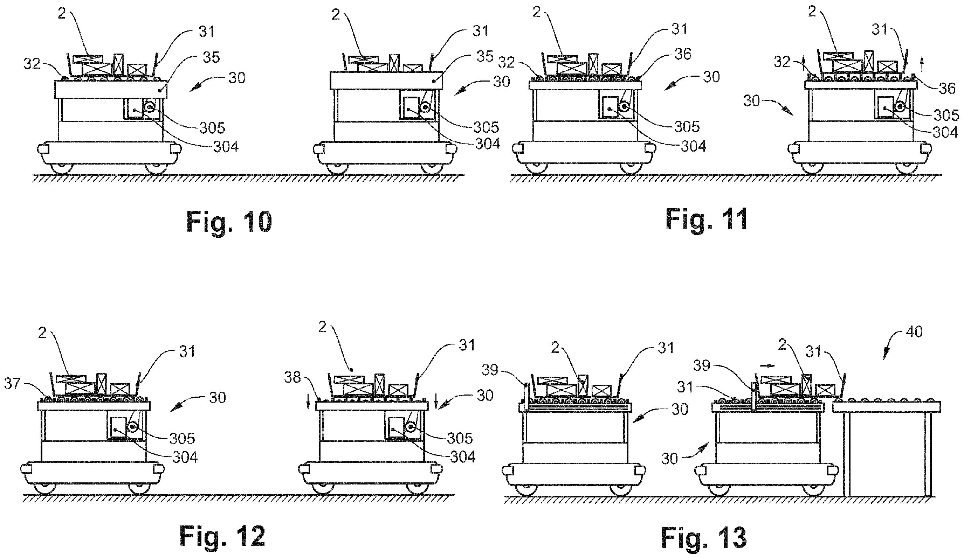

Um die Waren während des Förderwegs auf der Fördereinheit 30 bei deren Wegtransport (bis hin zum Versandraum 40 bzw. zur Spedition 50) positioniert zu halten, weist diese bevorzugt im Haltebereich für die kommissionierten Waren 2 bzw. Warenaufnahmeelement 21, 31, 81 langgezogene, feste oder bewegliche Halteelemente aufweist. Diese können, insbesondere Rippenlinien oder Rahmen sein, wie dies in einer besonderen Ausführungsform in Figur 10 gezeigt ist. Die Waren 2 bzw. Warenaufnahmeelemente 81 werden während des Förderwegs dadurch in ihrer Förderposition gehalten bzw. fixiert.

Alternativ oder auch mit den Rippenlinien vorzugsweise kombinierbar Fördereinheit 30 im Haltebereich für die kommissionierten Waren Arretierungselemente angeordnet. Dies sind bevorzugt bewegliche Haltestifte oder Rastmittel, gummierte Bremselemente, die höhenverstellbar zwischen Rollen angeordnet sind und/oder andere Bewegungselemente, welche bei der Übergabe der Waren 2 an den Versandraum 40 und/oder der Speditionsstelle 50 kraftmässig überwindbar bzw. lösbar sind, und Weiteres.

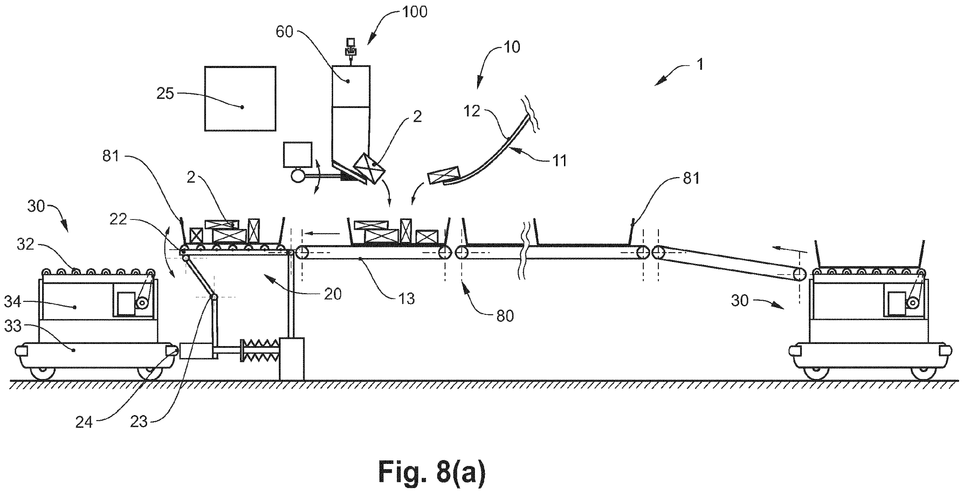

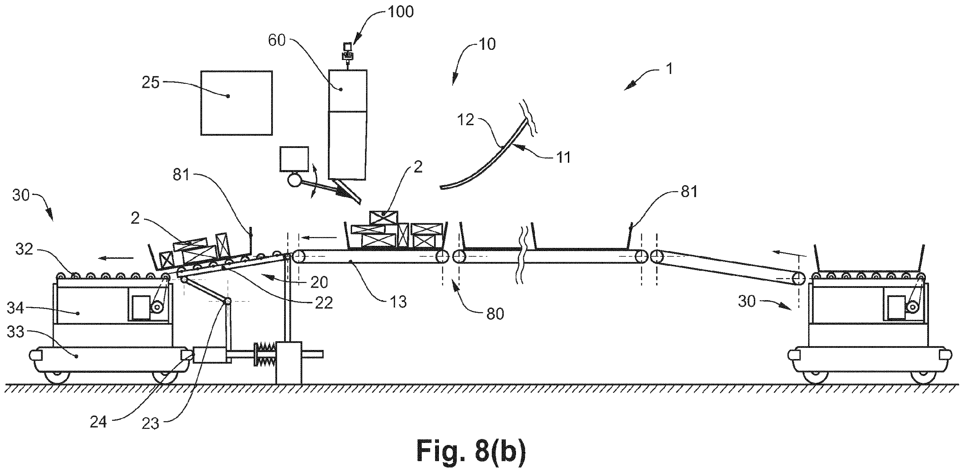

Figur 8 a) und b) zeigen eine vorteilhafte Ausführungsform einer erfindungsgemässen Vorrichtung 1 mit einem Entnahmehandlingmodul 20 in Form eines Kipptisches mit Kontrollmittel 24 in Form eines Federauslösers. Eine Fördereinheit 30 kontaktiert bei Ankunft bei dem Entnahmehandlingmodul 20 den Federauslöser, welches mechanisch mit dem Einstellmittel 23 des Entnahmehandlingmoduls 20 verbunden ist. Ein Komprimieren der Feder verursacht ein Kippen des Kipptisches in Abwärtsrichtung, sodass das mit Waren 2 befüllte Warenaufnahmeelement 21, 31, 81 entlang der Bewegungselemente 22 des Entnahmehandlingmoduls 20 auf die Manipulationsvorrichtung 32 der Fördereinheit 30 rutscht. Die Feder dient gleichzeitig als Rückstellfeder. Sie bewegt den Tisch wieder in die Ausgangslage, wenn das AGV von der Übernahmeposition wegfährt.

Die Befülleinheit 80 der Entnahmevorrichtung 10 weist in Figuren 8 a) und b) eine Rampe auf, welche es ermöglicht Warenaufnahmeelemente von einer tiefergelegenen Fördereinheit 30 zu übernehmen. So kann die Entnahmevorrichtung 10 an verschiedenen Fördereinheiten 30 und verschiedene vorhandene Logistikanlagen angepasst werden.

Eine Warenzuführung 3 mit einer Förderanlage 100, umfassend ein Fördersystem 60 und ein Förderband 70, ist in Figuren 6 bis 8 nicht komplett dargestellt, stattdessen ist nur ein Teil der Warenzuführung gezeigt. Es ist für den Fachmann jedoch ersichtlich, dass die Ausführungsform aus Fig. 8 auch eine erweiterte Warenzuführung 3, insbesondere mit dem ihm im Bereich der Logistik bekannten Sortier-, Lager- und Fördersystemen, umfassen kann.

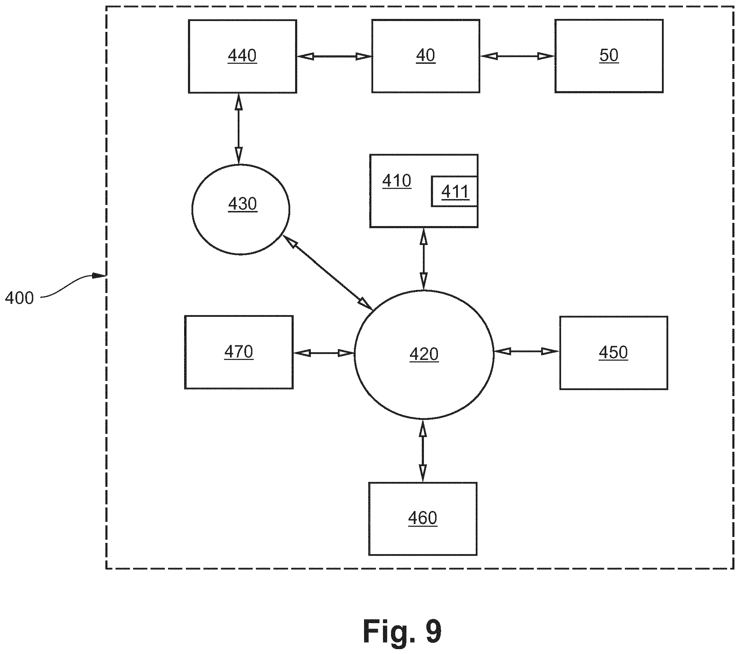

**Figur 9** zeigt schematisch ein erfindungsgemässes System 400 zur Kommissionierung von Waren 2 in Verbindung mit verschiedenen Teilsystemen. Über die Wareneingangseinheit 410 werden Waren in das System eingespeist und von der ersten Fördereinrichtung 420 übernommen. Die Wareneingangseinheit 410 enthält eine Warensteuerungseinheit 411, mit welcher der Materialfluss in die erste Fördereinrichtung 420 steuerbar ist. Es ist in weiteren Ausführungsformen möglich, dass die Warensteuerungseinheit 411 separat und unabhängig von der Wareneingangseinheit 410 ausgebildet ist. Die erste Fördereinrichtung 420 übernimmt Waren 2 von der Wareneingangseinheit 410 und fördert die Waren 2 auftragsorientiert weiter an die Schnittstelle 430. Die erste Fördereinrichtung 420 ist vorteilhafterweise eine Hängeförderanlage gemäss WO 2018/142243 A1 des Anmelders. Eine derartige Förderanlage umfasst in einer möglichen Ausführung ein Fördersystem 60, ein umlaufendes Förderband 70 und eine Befülleinheit 80. Die Schnittstelle 430 empfängt die Waren von der ersten Fördereinrichtung 420 und ist mit dieser fördertechnisch verbunden, wobei die Schnittstelle 430 zwischen der ersten 420 und der zweiten Fördereinrichtung 440 angeordnet ist. In einer bevorzugten Variante ist die Schnittstelle 430 als ein erfindungsgemässes Entnahmehandlingmodul 20 und die zweite Fördereinrichtung 440 als erfindungsgemässe Fördereinheit 30 ausgebildet. In dieser vorteilhaften Ausführung werden die Waren 2 von der Fördereinheit 30 an ein Versandraum 40 und/oder eine Speditionsstelle 50 transportiert. Vorteilhaft umfasst ein erfindungsgemässes System 400 zur Kommissionierung von Waren 2 ferner verschiedene Teilsysteme, insbesondere eine Warenausgangseinheit 450, ein Lagersystem 460 und ein Puffereinheit 470. Die Teilsysteme sind ebenfalls fördertechnisch mit den anderen Bestandteilen des Systems verbunden, sodass ein Informationsaustausch zwischen dem System und den Teilsystemen stattfinden kann. Hierdurch kann ein optimaler dynamischer Betrieb eines erfindungsgemässen Fördersystem begünstigt werden.

In besonderen Ausführungsformen der Erfindung können die Fördereinheiten 30 einzelne oder mehrere Waren 2 den Entnahmehandlingmodulen 20 zuführen oder solche von einem Entnahmehandlingmodul 20 zu einem anderen überführen. Auf diese Weise können bevorzugt Fehlerausschleusungen direkt durch eine Fördereinheit 30 behoben werden oder es können individuelle Waren 2, die mittels der Warenzuführung 3 nicht oder nur schwer beförderbar sind, direkt einem spezifischen Entnahmehandlingmodul zugeführt werden. Für den Fachmann ist ersichtlich, dass die Fördereinheiten 30, falls gewünscht, auch einzelne Waren 2 bereits mitführen können und so bei der Übergabe von kommissionierten Waren 2 von einem Entnahmehandlingmodul 20 an diese Fördereinheiten eine finale (ergänzende) Kommissionierung erfindungsgemäss erzielt wird. Hierdurch können den kommissionierten Waren beispielsweise Merchandisingartikel, Packzettel oder andere Waren oder Informationen beigefügt werden und dadurch eine Schlusskommissionierung erreicht werden.

Weiterhin ist es im Rahmen der Erfindung möglich, dass eine Fördereinheit 30 sequenziell oder parallel zwei oder mehr Entnahmehandlingmodule ansteuert und auf diese Weise zwei Gruppen von Kommissionswaren miteinander kombiniert werden. Dies ist besonders vorteilhaft, wenn (z.B. aufgrund der Warentypen) die Entnahmevorrichtungen 10 bzw. die nachgeschalteten Entnahmehandlingmodule 20 nur mit spezifischen Waren 2 beschickt werden, diese aber für eine gewünschte Kommission miteinander kombiniert werden müssen. Bei solchen besonderen Ausführungsformen, die alternativ zu AGVs andere Fördereinheiten 30 einsetzen, z.B. bewegbare Fördertische, können gleichzeitig oder quasi-parallel zwei Entnahmehandlingmodule 20 kommissionierte Waren 2 an diese übergeben.

Der bereits oben beschriebene Versandraum 40 erlaubt es erfindungsgemäss, die kommissionierten Waren 2 versandoptimiert für die Spedition bereitzustellen. Wenn erfindungsgemäss die Fördereinheiten 30 als autonome Fahrzeuge ausgebildet sind, ermöglicht dies, der Versandraum 40, das auch als nur als einfacher Pufferspeicher ausgebildet sein kann, asynchron bzw. in einer erst hier stattfindenden Sortierung der Kommissionen zu befüllen, bzw. im Versandraum 40 eine für die Spedition direkt eine geeignete Reihenfolge oder Gruppierung der Kommissionen bereitzustellen. Dies ist insbesondere vorteilhaft, wenn für verschiedene Transportfahrzeuge oder für eine gewünschte zeitliche Spedition der kommissionierten Waren 2 eine dedizierte Reihenfolge erfolgen soll.

Im Rahmen der Erfindung ist es ebenfalls möglich, die Warenaufnahmeelemente 21, 31 81 in verschiedenen Ausführungsformen zu verwirklichen. In einer bereits für Fig. 5 beschriebenen Ausführung umfassen die Warenaufnahmeelemente 21, 31, 81 eine geeignete Auflagefläche. In weiteren vorteilhaften Ausführungen sind die Warenaufnahmeelemente 21, 31 81 als Körbchen, offene/ halboffene Container, Kisten oder Ähnliches ausgeführt. In noch weiteren Ausführungen weisen die Warenaufnahmeelemente 21, 31, 81 zwei oder mehr Abschnitte auf zur Sortierung der Waren auf den Warenaufnahmeelementen 21, 31 81. Beispielweise kann ein Abschnitt für grosse Waren und ein Abschnitt kleine Waren, oder ein Abschnitt für verpackte Waren und ein Abschnitt für nicht verpackte Waren vorgesehen sein, usw.

Die Bewegungselemente 22 sind in einer einfachen Ausführungsform Neigungselemente, wie beispielsweise in Fig. 4 und Fig. 5 dargestellt. Sie können aber auch in weiteren bevorzugten Ausführungen als Greifer/Greiferarme, Haken oder Mitnehmer ausgeführt sein. In noch weiteren bevorzugten Ausführungsformen sind die Bewegungselemente 22 Auflageflächen, Förderer, Förderbänder, Stosser/ Pusher, Schieber, Stifte, Robotereinheiten, beispielsweise ein Roboterarm, Magnete, Druckluftdüsen oder weitere dem Fachmann bekannte Lösungen. Ähnlich ist die Manipulationsvorrichtung 32 der Fördereinheit 30 als Förderer, Förderband, Stosser/ Pusher, Schieber, Stift, Robotereinheit, beispielsweise ein Roboterarm, Magnet, Druckluftdüse oder vergleichbare dem Fachmann bekannte Lösungen realisierbar.

Die **Figuren 10 bis 13** zeigen unterschiedliche Varianten einer erfindungsgemässen Fördereinheit 30 mit Manipulationsvorrichtung 32 und verschiedenen bevorzugt möglichen Halte- und Arretierungselementen 35-39.

**Figur 10** zeigt schematisch eine erfindungsgemässe Fördereinheit 30 zur Weitergabe von Waren 2 in einem Warenaufnahmeelement 31 an einen Versandraum 40 und/oder eine Speditionsstelle 50, wobei die Fördereinheit 30 in der in Figur 10 dargestellten Ausführungsform eine aktive Manipulationsvorrichtung 32 in Form eines Rollenförderers aufweist. Der Rollenförderer 32 wird mittels eines Motors 304 mit einem Laufrad 305 angetrieben. Ferner weist die Fördereinheit 30 in Figur 10 ein Arretierungselement in Form eines höhenverstellbaren Rahmens 35 auf. Nach einer Übernahme und Positionierung der Waren 2 kann mittels dem höhenverstellbaren Rahmen 35 sichergestellt werden, dass die Waren 2 in oder ohne Warenaufnahmeelemente 31 (oder einzelne Waren) während des Transports auf der Fördereinheit 30 ihre Position nicht ändern oder gar von der Fördereinheit 30 herunterfallen. Der Rahmen ist ebenfalls motorisiert bewegbar und in einer alternativen Ausführungsform mittels der Steuerungseinheit 25 des Entnahmehandlingmoduls 20 steuerbar. In einer weiteren alternativen Ausführungsform kann die Fördereinheit 30 anstelle des höhenverstellbaren Rahmens 35 eine umlaufende Rippenstruktur aufweisen, welche das Warenaufnahmeelement 31 bzw. die Waren 2 während des Transports auf der Fördereinheit 30 an der Stelle halten. Bei Ankunft der Fördereinheit 30 an einem Destinationsort, kann mittels einer einwirkenden Kraft, beispielsweise einem Schieber, einem Greiferarm oder Druckluft, der Bewegungswiderstand der Waren 2 auf der Rippenstruktur überwunden werden. Zudem ist es für besondere, erweiterte Ausführungsformen bevorzugt möglich, in Verbindung mit einem randumlaufenden Rahmen oder einer randumlaufenden Rippenstruktur oder anstelle von diesen eine Rippenstruktur mit mindestens zwei sich kreuzenden, langgestreckten Rippen vorzusehen, welche die Auflagefläche des Warenaufnahmeelements 31 untergreift und in formanliegende Nutausnehmungen des Warenaufnahmeelements 31 lösbar (ebenfalls durch Krafteinwirkung) eingreift, so dass vor der Abgabe der Waren eine entsprechende Fixierung des Warenaufnahmeelements während der Bewegung des Fahrzeugs gegeben ist. Eine solche bevorzugte Kreuzstruktur von Rippen in Verbindung mit entsprechenden Ausnehmungen am Warenaufnahmeelement 31 ermöglicht eine besonders einfache Fixierung bzw. ein Halten während des Transports. Für den Fachmann ist ersichtlich, dass eine konstruktive Umkehrung, also Ausnehmungen an der Auflagefläche der Fördereinheit ebenfalls möglich ist. Alternativ oder kombiniert mit Rippenstrukturen können auch Noppen oder kegelstumpfförmige Vorsprünge bevorzugt an den zusammenwirkenden Flächen angeordnet werden.

**Figur 11** zeigt eine erfindungsgemässe Fördereinheit 30 zur Weitergabe von Waren 2 in einem Warenaufnahmeelement 31 an einen Versandraum 40 und/oder eine Speditionsstelle 50, wobei die Fördereinheit 30 in der in Figur 11 dargestellten Ausführungsform eine Manipulationsvorrichtung 32 in Form eines Rollenförderers aufweist. Der Rollenförderer 32 wird mittels eines Motors 304 mit einem Laufrad 305 angetrieben. Ferner weist die Fördereinheit 30 in Figur 11 eine aufheb- und absenkbaren Stiftmatrize 36 auf, auf welcher die Waren 2 in dem Warenaufnahmeelement 31 platziert sind. Die anheb- und absenkbare Stiftmatrize 36 ist auch motorisiert bewegbar und ist während des Transports der Waren 2 auf der Fördereinheit 30 in einer angehobenen Position. Dadurch liegen die Waren 2 in dem Warenaufnahmeelement 31 direkt auf der Stiftmatrize 36 und sind nicht mehr auf den Förderrollen des Rollenförderers 32 aufliegend. Erst bei der Ankunft der Fördereinheit 30 an einem Destinationsort wird die Stiftmatrize 36 abgesenkt, sodass die Waren 2 in dem Warenaufnahmeelement 31 mittels des Rollenförderers 32 weitergegeben werden können. In weiteren alternativen Ausführungsformen können anstelle der Stiftmatrize 36 auch ein aufheb- und absenkbarer Rost, Stäbe oder auch rutschhemmend gummierte Auflagen, ein Gitter oder sonstige geeignete Lösung als Arretierungselement vorgesehen sein.

**Figur 12** zeigt eine erfindungsgemässe Fördereinheit 30 zur Weitergabe von Waren 2 in einem Warenaufnahmeelement 31 an einen Versandraum 40 und/oder eine Speditionsstelle 50, wobei die Fördereinheit 30 in der in Figur 11 dargestellten Ausführungsform eine Manipulationsvorrichtung 32 in Form eines Rollenförderers aufweist. Der Rollenförderer 32 wird mittels eines Motors 304 mit einem Laufrad 305 angetrieben. Ferner weist die Fördereinheit 30 in Figur 12 anheb- und absenkbare Rollen 37 auf, insbesondere anheb- und absenkbare Förderrollen des Rollenförderers 32. Zwischen den einzelnen Rollen 37 des Rollenförderers 32 sind Rippenelemente 38 angeordnet, sodass bei einer Absenkung der Rollen 37 die Waren 2 auf dem Warenaufnahmeelement 31 direkt auf den Rippenelementen 38 aufliegen und dadurch in ihrer Position gehalten werden (analog zur Beschreibung bezüglich Fig. 10). Bei der Ankunft der Fördereinheit 30 an einem Destinationsort werden die Rollen 37 wieder angehoben, was eine Weitergabe der Waren 2 bzw. des Warenaufnahmeelements 31 ermöglicht.

**Figur 13** zeigt eine erfindungsgemässe Fördereinheit 30 zur Weitergabe von Waren 2 in einem Warenaufnahmeelement 31 an einen Versandraum 40 und/oder eine Speditionsstelle 50, wobei die Fördereinheit 30 in der in Figur 13 dargestellten Ausführungsform eine Manipulationsvorrichtung 32 in Form eines Rollenförderers aufweist. Der Rollenförderer 32 wird mittels eines Motors 304 mit einem Laufrad 305 angetrieben. Ferner ist in Figur 13 ein Schieber 39 der Fördereinheit 30 zu sehen, welcher zur Warenweitergabe an einen Destinationsort, beispielsweise den Versandraum 40, dient. Der Schieber 39 schiebt die Waren 2 bzw. das Warenaufnahmeelement 31 von der Fördereinheit 30 auf die Entnahmestelle des Versandraums 40. Hierbei ist es vorgesehen, dass der Schieber mit einer ausreichenden Kraft die Waren 2 von der Fördereinheit 30 schiebt, um den Bewegungswiderstand der Waren 2 bzw. des Warenaufnahmeelements 31 zu überwinden. Diese Ausführungsform ist besonders vorteilhaft, wenn die Fördereinheit 30 passive Manipulationsvorrichtungen 32 aufweist, beispielsweise nicht motorisierte Rollen. Der Schieber 39 kann in alternativen Ausführungen auch als Haken, Mitnehmer, Magnet, Einrastelement, Roboterarm oder anderen geeigneten kraftschlüssigen Mitteln, die dem Fachmann bekannt sind, ausgeführt werden. Ebenfalls möglich ist eine Integrierung einer Greifervorrichtung oder einer anderen Entnahmevorrichtung in die Entnahmestelle des Versandraums, wobei in diesem Fall die Waren 2 und/oder die Warenaufnahmeelemente 21, 31, 81 von der Fördereinheit 30 mittels der Greifer oder der Entnahmevorrichtung von der Fördereinheit 30 weg bewegt werden.

### Bezugszeichenliste

- 1: Vorrichtung zur Kommissionierung von Waren
- 2: Ware
- 3: Warenzuführung

- 10: Entnahmevorrichtung
- 11: Entnahmestelle
- 12: Zuführeinheit
- 13: Puffereinheit
- 14: Pusher
- 15: Stoppelement

- 20: Entnahmehandlingmodul
- 21, 31, 81: Warenaufnahmeelement
- 22: Bewegungselement
- 23: Einstellmittel
- 24: Kontrollmittel
- 25: Steuerungseinheit
- 26: Sensor

- 30: Fördereinheit
- 32: Manipulationsvorrichtung
- 33: Trägereinheit
- 34: Informationsverarbeitungseinheit
- 35: Rahmen
- 36: Stift
- 37: Rollen
- 38: Halteelement, Rippenelement
- 39: Schieber

- 40: Versandraum
- 50: Speditionsstelle
- 60: Fördersystem
- 70: Förderband
- 80: Befülleinheit

- 100: Förderanlage
- 200: Puffersystem
- 301: Fahrzeuggehäuse
- 302: Rollenförderer
- 304: Motor
- 305: Laufrad

- 400: System
- 410: Wareneingangseinheit
- 411: Warensteuerungseinheit
- 420: erste Fördereinrichtung
- 430: Schnittstelle
- 440: zweite Fördereinrichtung
- 450: Warenausgangseinheit
- 460: Lagersystem
- 470: Puffereinheit

## Patentansprüche

1. Vorrichtung (1) zur Kommissionierung von Waren (2), mit einer Warenzuführung (3), umfassend
a) eine Entnahmevorrichtung (10) mit mindestens einer Entnahmestelle (11) zum Entladen von Waren, und
b) ein Entnahmehandlingmodul (20), an das die Waren (2) von der Entnahmevorrichtung (10) übergeben werden, wobei das Entnahmehandlingmodul (20) mindestens ein Warenaufnahmeelement (21, 31, 81) sowie mindestens ein Bewegungselement (22) umfasst zur Weitergabe der Waren an eine nachgeschaltete Fördereinheit (30).

2. Vorrichtung nach Anspruch 1, wobei die Warenzuführung (3) eine Förderanlage (100) umfasst, welche fördertechnisch mit der Entnahmevorrichtung (10) und diese fördertechnisch mit dem Entnahmehandlingmodul (20) verbunden ist, wobei die Entnahmevorrichtung (10) mindestens eine Befülleinheit (80) umfasst.

3. Vorrichtung nach Anspruch 2, wobei eine Puffereinheit (13) in die Befülleinheit (80) integriert oder dieser als separates Modul zugeordnet ist.

4. Vorrichtung nach Anspruch 2 oder 3, wobei die Befülleinheit (80) mindestens ein Warenaufnahmeelement (21, 31, 81) aufweist, und als Transportförderer ausgebildet ist.

5. Vorrichtung nach einem der Ansprüche 1 bis 4, wobei die Entnahmestelle (11) eine erste Zuführeinheit (12) zum Abgeben der Waren von der Warenzuführung (3) an die Entnahmevorrichtung (10) aufweist.

6. Vorrichtung nach einem der Ansprüche 1 bis 5, wobei die Entnahmevorrichtung (10) eine zweite Zuführeinheit (13) aufweist, um die Waren (2) an das Entnahmehandlingmodul (20) zu überführen.

7. Vorrichtung nach einem der Ansprüche 1 bis 6, wobei das Entnahmehandlingmodul (20) eine Steuerungseinheit (25) mit Kommunikationsmitteln und mindestens ein Kontrollmittel (24) für die Waren (2) umfasst.

8. Vorrichtung nach einem der Ansprüche 1 bis 7, wobei das Entnahmehandlingmodul (20) als ein Puffersystem (200) ausgebildet ist.

9. Vorrichtung nach einem der Ansprüche 1 bis 8, wobei die Fördereinheit (30) eine mobile Trägereinheit (33) und mindestens eine Manipulationsvorrichtung (32) umfasst zur Weitergabe der Waren an ein Versandraum (40) und/oder eine Speditionsstelle (50).

10. Vorrichtung nach einem der Ansprüche 1 bis 9, wobei die Fördereinheit (30) ein oder mehrere autonome Fahrzeuge umfasst.

11. Vorrichtung nach Anspruch 10 unter Rückbezug auf Anspruch 7, wobei mindestens ein autonomes Fahrzeug eine Informationsverarbeitungseinheit (34) enthält, welche abhängig von einer von der Steuerungseinheit (25) generierten Information ein oder mehrere Entnahmehandlingmodule (20) ansteuert, und dort von diesen die Waren (2) übernimmt und zu einem Versandraum (40) und/oder zu einer Speditionsstelle (50) transportiert.

12. Vorrichtung nach Anspruch 10 oder 11, wobei mindestens ein autonomes Fahrzeug eine Informationsverarbeitungseinheit (34) enthält, welche abhängig von softwaremässig generierten Information ein oder mehrere Entnahmehandlingmodule (20) ansteuert, und dort von diesen die Waren (2) übernimmt und zu einem Versandraum (40) und/oder zu einer Speditionsstelle (50) transportiert. ^{··}

13. Verfahren zur Kommissionierung von Waren (2), umfassend die Verfahrensschritte:
- Bereitstellen einer Warenzuführung (3), insbesondere mit einer Sortier- und Förderanlage;
- Entladen von Waren (2) durch eine Entnahmestelle (11) einer Entnahmevorrichtung (10);
- Übergeben der Waren (2) von der Entnahmevorrichtung (10) an ein Entnahmehandlingmodul (20); und
- Weitergeben der Waren (2) von dem Entnahmehandlingmodul (20) an eine nachgeschaltete Fördereinheit (30) mittels mindestens eines Bewegungselements (22) des Entnahmehandlingmoduls (20).

14. System (400) zur Kommissionierung von Waren (2), umfassend
- eine Wareneingangseinheit (410) mit einer Warensteuerungseinheit (411) zum Bereitstellen von Waren (2);
- eine erste Fördereinrichtung (420) zum Entnehmen der Waren (2) von einer Warenzuführung (403);
- eine zweite Fördereinrichtung (440) zum Überführen der Waren (2) an einen Versandraum (40) und/oder eine Speditionsstelle (50); und
- mindestens eine Schnittstelle (430) zur dynamischen Kommissionierung der Waren (2), wobei die mindestens eine Schnittstelle zwischen der ersten und der zweiten Fördereinrichtung angeordnet ist.

15. System nach Anspruch 14, wobei die zweite Fördereinrichtung (440) als eine Fördereinheit (30) ausgebildet ist, und wobei die Fördereinheit (30) ein oder mehrere autonome Fahrzeuge umfasst.

16. System nach Anspruch 24 oder 25, wobei das System (400) eine Warenausgangseinheit (450) für den Rücktransport von fehlerhaften, beschädigten und/oder markierten Waren (2) umfasst; und/oder mindestens ein Lagersystem (460) und/oder eine zusätzliche Puffereinheit (470) umfasst.
